(19) Europäisches Patentamt
European Patent Office
Office européen des brevets

(11) EP 2 472 425 B1

(12) EUROPEAN PATENT SPECIFICATION

(45) Date of publication and mention of the grant of the patent:
**16.09.2015 Bulletin 2015/38**

(51) Int Cl.:
***G06F 21/56*** *(2013.01)*

(21) Application number: **11187019.2**

(22) Date of filing: **28.10.2011**

(54) **System and method for detecting unknown malware**

System und Verfahren zur Erkennung einer unbekannten Malware

Système et procédé de détection de malveillance inconnue

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2010 RU 2010154528**

(43) Date of publication of application:
**04.07.2012 Bulletin 2012/27**

(73) Proprietor: **Kaspersky Lab, ZAO**
**Moscow 125212 (RU)**

(72) Inventors:
- **Mashevsky, Yuri V.**
  **123060 Moscow (RU)**
- **Vasilenko, Roman**
  **123060 Moscow (RU)**

(74) Representative: **Sloboshanin, Sergej et al**
**von Füner Ebbinghaus Finck Hano**
**Mariahilfplatz 3**
**81541 München (DE)**

(56) References cited:
**US-A1- 2006 037 080**

- **SCHULTZ M G ET AL: "Data mining methods for detection of new malicious executables", PROCEEDINGS OF THE 2001 IEEE SYMPOSIUM ON SECURITY AND PRIVACY. S&P 2001. OAKLAND, CA, MAY 14 - 16, 2001; [PROCEEDINGS OF THE IEEE SYMPOSIUM ON SECURITY AND PRIVACY], LOS ALAMITOS, CA : IEEE COMP. SOC, US, 14 May 2001 (2001-05-14), pages 38-49, XP010543206, DOI: 10.1109/SECPRI.2001.924286 ISBN: 978-0-7695-1046-0**
- **MENAHEM E ET AL: "Improving malware detection by applying multi-inducer ensemble", COMPUTATIONAL STATISTICS AND DATA ANALYSIS, NORTH-HOLLAND, AMSTERDAM, NL, vol. 53, no. 4, 15 February 2009 (2009-02-15), pages 1483-1494, XP025893038, ISSN: 0167-9473, DOI: 10.1016/J.CSDA.2008.10.015 [retrieved on 2008-10-19]**
- **Peter A Flach: "The Geometry of ROC Space: Understanding Machine Learning Metrics through ROC Isometrics", Proceedings of the Twentieth International Conference on Machine Learning (ICML-2003), 1 August 2003 (2003-08-01), XP055161360, Retrieved from the Internet: URL:http://www.aaai.org/Papers/ICML/2003/I CML03-028.pdf [retrieved on 2015-01-12]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 472 425 B1

## Description

### TECHNICAL FIELD

The present disclosure relates generally to the field of computer security and, in particular, to systems and methods for detecting unknown malware.

### BACKGROUND

The significant growth in the number of Internet users in the past decade fueled by the advances in Internet services, such as gaming, news, entertainment, shopping, banking, social networking, etc., has led to significant increase in emergence of new types of malware. The number of new malicious programs being detected has increased more than tenfold in the last three years alone. And the rate of growth continues to increase. Thus, antivirus software developers have been working hard to keep up with the proliferation of new kinds of malware by developing new methods and systems for detection of malicious software.

As a result of this development, techniques of signature matching and heuristic analysis of malware have become widespread and most frequently used in antivirus applications and other computer and network security products. However, these techniques have limitations.

Signature matching methods are oriented exclusively towards the detection of known software objects and are poorly adapted in detection of previously unknown types of malware. This is associated with the fact that they are based on a comparison of the values of hash functions from small sections of a file. Thus, by virtue of the cryptographic properties of the hash functions, a change in even one bit in the input data completely changes the output result.

Heuristic analysis methods of protection also have deficiencies in the detection of unknown malware: first, a longer operating time relative to the signature methods; and second, they are already close to the limit of their capabilities, providing a detection rate of 60-70%.

Therefore, new methods for detection of unknown malware are necessary.

US 2006/0037080 A1 discloses a system and method for detecting malicious executable software code, wherein benign and malicious executables are gathered and encoded as a training example using n-grams of byte codes as features. After selecting the most relevant n-grams for prediction, a plurality of inductive methods are evaluated, including naive Bayes, decision trees, support vector machines, and boosting.

Schultz M. et al. describes in the publication "Data Mining Methods for Detection of New Malicious Executables" (Proceedings of the 2001 IEEE Symposium on Security and Privacy. S&P 2001. Oakland, CA, May 14-16, 2001; XP010543206) the use of different data-mining algorithms for training multiple classifiers on a set of malicious and benign executables, and the use of a test set in order to check the accuracy of the classifiers generated with the help of the data-mining algorithms. For the purpose of classifier training a data-mining algorithm, such as RIPPER, is used which is applied to features extracted from binary profiles of the data sets.

The publication "Improving malware detection by applying multi-inducer ensemble" by Menahem E. et al (Computational Statistics and Data Analysis, vol. 53, no. 4, 15 February 2009, pp. 1483-1494; XP025893038) describes a malware detection approach which is based on a combination of a set of classifiers in order to obtain a better composite global classifier. The combination approach, also called Troika, reveals three layers of combining classifiers. Specialist classifiers (layer 1) combine the outputs of base classifiers, Meta-classifiers (layer 2) combine the Specialist classifier outputs, and Super-classifiers (layer 3) combine all Meta-classifier outputs.

The publication "The Geometry of ROC Space: Understanding Machine Learning Metrics through ROC Isometrics" by Peter A. Flach (Proceedings of the Twentieth International Conference on Machine Learning (ICML-2003), 1 August 2003; XP055161360) describes the use of ROC isometric plots to analyze machine learning metrics that are commonly used for model construction and evaluation.

### SUMMARY

Disclosed are a system, method and computer program product for detecting unknown malware as set forth by independent claims 1, 7 and 13. In one example embodiment, a method for detecting unknown malware comprises determining if a software object is a known malicious or clean object; and, if the object is unknown, determining file type of the unknown object. Based on the file type of the object, two or more different malware analysis methods are selected for analyzing the object for presence of malware. For each selected malware analysis method, an associated object gene is generated. The object gene is a data structure containing a plurality of information elements retrieved from or associated with an object. Then, the object genes are analyzed for presence of malware using the selected malware analysis methods.

In another example embodiment, a method for detecting unknown malware comprises generating at least one object gene for each one of a plurality of known malicious and clean objects. Each object gene is analyzed using one or more malware analysis methods. Then, a level of successful detection of malicious objects by one or a combination of two or more malware analysis methods is computed based on analysis of genes of the known malicious objects by said methods. Next, a level of false positive detections of malicious objects by one or a combination of two or more malware analysis methods is computed based on analysis of genes of known clean objects by said methods. Then, effectiveness of each one or the combination of malware analysis methods is measured as a function of the level of successful detections of the known malicious objects and the level of false positive detections of the known clean objects. Finally, one or a combination of the most effective malware analysis methods are selected for analyzing an unknown object for presence of malware.

The above simplified summary of example embodiments serves to provide a basic understanding of the invention. This summary is not an extensive overview of all contemplated aspects of the invention, and is intended to neither identify key or critical elements of all embodiments nor delineate the scope of any or all embodiments. Its sole purpose is to preset one or more embodiments in a simplified form as a prelude to the more detailed description of the invention that follows. To the accomplishment of the foregoing, the one or more embodiments comprise the features described and particularly pointed out in the claims.

## BRIEF DESCRIPTION OF THE DRAWINGS

The accompanying drawings, which are incorporated into and constitute a part of this specification, illustrate one or more example embodiments of the invention and, together with the detailed description serve to explain their principles and implementations.

In the drawings:

**Fig. 1** illustrates a flow diagram of a process for detecting unknown malware according to one example embodiment.

**Fig. 2** illustrates a table for selecting malware analysis methods according to one example embodiment.

**Fig. 3** illustrates a flow diagram of a process for selecting malware analysis methods according to one example embodiment.

**Fig. 4** illustrates a table for selecting a computer system for analysis of unknown objects for presence of malware according to one example embodiment.

**Fig. 5** illustrates a schematic diagram of a system for implementing the method of **Fig. 3** according to one example embodiment.

**Fig. 6** illustrates a diagram of a general-purpose computer for implementing systems and methods for detection of unknown malware according to disclosed embodiments.

**Fig. 7** illustrates an example of a execution path gene of a worm program.

**Fig. 8** illustrates an example of a program flowchart gene for a Trojan-horse program.

**Fig. 9** illustrates an example of a function call graph gene for a worm program.

**Fig. 10** illustrates an example of an operational area gene of an executable file.

**Fig. 11** illustrates schematically structure of a PDF file.

**Fig. 12** illustrates a table for evaluating the effectiveness of malware analysis methods according to one example embodiment.

**Fig. 13A** illustrates an example of a modification of program code so that line-by-line comparison analysis would fail.

**Fig. 13B** illustrates a method of counteracting the analysis of a function call-chart by adding dummy instructions.

**Fig. 14** illustrates an example of the effectiveness ratio of the operation of each method individually and in combination according to one example embodiment.

DETAILED DESCRIPTION OF EXAMPLE EMBODIMENTS

Example embodiments of the present invention are described herein in the context of systems, methods and computer program products for detecting unknown malicious objects. Those of ordinary skill in the art will realize that the following description is illustrative only and is not intended to be in any way limiting. Other embodiments will readily suggest themselves to those skilled in the art having the benefit of this disclosure. Reference will now be made in detail to implementations of the example embodiments of the invention as illustrated in the accompanying drawings. The same reference indicators will be used to the extent possible throughout the drawings and the following description to refer to the same or like items.

In one example embodiment, a concept of "object genome" is used for description of software objects, adaptive selection of a method for analysis of software objects, and detection of malicious object. A software object as used herein includes files of different format, such as executable files, scripts, documents, libraries, and other types of executable code or data. An object genome is a data structure containing a set of characteristics, each of which in a general form describes a software object in such a way that it is possible to determine its affinity to one of the classes. In one example embodiment, the object genome consists of a set of so-called "genes" (by analogy with biology), whereby the gene is an analogue of the characteristic of the object. Hereinafter, for simplicity, we shall use the term "gene". In particular, an object gene may be defined as a data structure containing a plurality of different information elements of the object being studied, including, but not limited to, unique lines of code of the object, its operational areas, program execution path, behavior patterns, program flowcharts, operating system API call graphs, and other types of information.

Different types of objects may have different genes and different genes may include different information elements extracted from the object. For example, operational area gene may include portions of a file that are loaded into random access memory during file execution. **Fig. 10** shows one example for obtaining the operational areas of an executable file being used in the environment of operating systems in the Windows family. Such files are called portable executable (PE) files. These types of files have specific structure, namely, a header, a set of sections, import tables, relocation tables, etc. Thus, an operational area gene for this kind of file may include the most important elements of the file, including its header, entry point, a pointer to the main function, and other service areas. Furthermore, as shown in **Fig. 10**, 4 KB of data are taken before and after the specified elements. In this way, 32 KB of information is generated, which is stored in random access memory and used for further analysis. This approach minimizes the file analysis time since direct access to an object on the hard drive is a very slow operation in the computer, while working with random access memory is substantially faster.

However, in the processing of files of a different format, such as, a portable document format (PDF), other portions of the file may be selected as operational areas. Therefore, operation area gene for this type of object will include different information elements from those used in PE files. In particular, in case of PDF files, file's active content, such as Java scripts (scripts written in Javascript language), may be considered as the most important information elements characterizing functionality of the file because execution of Javascript in the body of a document is not a secure operation, since scripts can call other executable files. Therefore, active content elements of this object may be included in the operation area gene. **Fig. 11** shows a structure of the PDF file, which includes a plurality of active and passive content elements and a table of cross-references between these elements, and rules for decoding these elements.

Furthermore, different methods may be used for analyzing different object genomes in order to determine if the objects are malicious or clean. For example, a function call-graph gene of an object may be analyzed by means of comparison with analogous function call-graphs of known malicious objects stored in a remote malware database. In one embodiment, genes for which the malware databases do not take up much space can be processed without requests to the remote database. In this case, the indicated databases may be transmitted to the appropriate analytical component, which may be a part of an antivirus application deploy on the user's computer. This analytical component would be able to compare function call-graph gene with the function call-graph of known malicious objects from the received databases directly on the user computer and render an appropriate decision as to whether the object is malicious or not.

**Fig. 1** illustrates an example method for detecting unknown malware using principles disclosed above. The method 100 may be implemented by an antivirus application deployed on a user computer system or other type of security software. At step 110, the value of a hash function from the object being analyzed may be computed and compared to the values stored in local or remote databases of malicious and clean objects. Here, the mentioned databases can operate under the control of existing known and future database management systems (DBMSs), such as Oracle, MySQL, Microsoft SQL Server, and other. In addition, any known hash functions may be used, including MD5, SHA-1, SHA-2, Skein, and others. The identification of known malicious and clean objects at the beginning of the process is preferred in order to minimize the set of all objects that must be further analyzed for presence of malware to include unknown objects only. Thus, at step 120, if the object is determined as either a known malware or as a clean object, no further analysis of that object is necessary and the process 100 may end.

However, if at step 120, the object is determined to be unknown, the processing passes to step 130, where one or more malware analysis methods for analyzing the unknown object are selected based on the file type of the unknown object, e.g., an executable file, PDF file, script, dynamic link library, or other file types. An example embodiment of the process for selection of malware analysis methods is shown in **Fig. 3**. Next at step 140, object genomes for each selected malware analysis method are generated. Here, the list of different genes can be determined depending on the capabilities and resources of the computer system on which the object will be analyzed and the file type of object being analyzed. The process of selecting the appropriate genes from the object is shown in more detail in **Figs. 2** and **3**, which will be discussed herein below. Next at step 150, a computer system capable of analyzing this genome in a most efficient manner possible is selected based on its characteristics. This computer system may be the same or different from the computer system on which the object was detected. One example embodiment of the method for selecting a computer system for analysis of an object genome is shown in **Fig. 4**. Next, at step 160, the object genome is analyzed for presence of malware using one or more different selected malware analysis methods described herein. Finally, at step 170, results of malware analysis may be sent to the user computer system.

In one example embodiment, the genes of unknown object may be first analyzed using exact match comparison technique with information contained in known malicious and/or clean object databases. For example, if a behavior pattern analysis method was selected at step 130, the behavior pattern gene may be generated and first subjected to an exact match comparison with analogous behavior patterns of known malicious objects, which are stored in a known malware database. These databases may be local to the computer system that performs analysis or remote therefrom. For instance, a local database may be implemented as part of the antivirus application that performs analysis of the software object for presence of malware. If the object gene has an exact match in either malicious or clean object databases, no further analysis is necessary and results of the analysis may be send to the user computer system.

However, if no exact match was found, an approximate string matching (also known as fuzzy string searching) may be performed on object genome in accordance with another example embodiment. Because approximate string matching is rather resource-intensive process, it should be performed only after the exact match analysis has failed to provide conclusive results. In one example embodiment, approximate string matching involves a nonspecific comparison of lines, for example using Levenshtein, Landau-Vishkin or other algorithms. Using the example of a behavior pattern gene, the sequence of lines of code comprising the behavior pattern may be compared with known malicious behavior patterns. The level of similarity between the behavior patterns may be determined on the basis of some given threshold being exceeded.

Yet in another example embodiment, the unknown object may be analyzed using security rating method, and on the basis of the assigned security rating a decision can be made whether the object is malicious or clean. Using the example of a behavior pattern gene, the security rating analysis can be performed in the following manner: the behavior pattern of an unknown object is divided into several logical blocks, wherein each block includes a sequence of assembler instructions executable prior to the jump (JMP) instruction (see the description of **Fig. 8** below); the status of each of block is determined, wherein the status includes: malicious (found only in the malicious patterns), clean (found only in clean patterns), mixed (found in both malicious and clean patterns), and unknown (a block that is encountered for the first time); the security rating is determined depending on the status and frequency of appearance of each block in the behavior pattern; and the security rating for the entire behavior pattern is computer by combining the ratings of all logical blocks. The decision whether the object is malicious or not may be made on the basis of the total security rating for the object genome.

Finally, at step 160, once the unknown object has been classified as malicious or clean, the result of the analysis is sent to the user computer on which the object was detected, so that appropriate actions can be taken by the antivirus application deployed on the user computer.

**Fig. 2** illustrates one example of a process for selecting relevant genes for malware analysis. In general, the process is based on minimizing the time necessary to determine that the object is malicious. The methods may include, but not limited to, analysis of unique lines of code of the an object, analysis of object's operational areas, analysis of object's execution path, analysis of object's behavior pattern, analysis of object's execution flowchart, analysis of objects function call-chart, etc. Then, on the basis of the selected analysis method(s), the appropriate information elements of the object are retrieved from the object to generate all relevant gene(s), such as unique lines of code gene, API call graph gene, operational areas gene, or other genes.

In one example embodiment, analysis method(s) may be selected using fuzzy logic. Two linguistic variables are determined: the effectiveness of the method and the resource-intensiveness of obtaining input data for the method, for each of which a term-set is determined, for example {"low", "medium", "high"}. Here, the effectiveness of the methods is reexamined periodically. Then, the ordered list of methods can be divided into categories, depending on the configuration type of the computer system that performs the analysis, e.g. "low-power", "medium", "high-productivity". Thus, based on the selected method(s), an optimal set of genes can be generated, which the user computer system can extract from the object being analyzed and which give the best results in determining if the object is malicious.

**Fig. 3** illustrates a process for determining the most effective combination of methods for analyzing unknown objects and their corresponding genes for presence of malware. The effectiveness will be defined as the ratio between a level of successful malware detections and a level of false positive detections. The level of successful detection of unknown malware may be calculated as a ratio between the number of detected malicious objects and the total number of malicious objects. The level of false positive detections may be calculated as a ratio between the number of clean objects of that type recognized as malicious and the total number of clean objects of that type. The use of different combinations of malware analysis methods is preferred because, in some cases, methods that are not the most effective when used individually give the best results when combined. **Fig. 14** shows an example in which the use of analysis methods 1410 and 1420 together provides a non-linear increase in the effectiveness of detection of malicious objects as shown by the combined curve 1430.

As shown in **Fig. 3**, at step 310, object genomes are generated for all objects from the databases of malicious and clean objects. Thereafter, at step 320, at least one method of analysis is selected for each gene. Then, at step 330, at least one combination of methods for analysis of each gene is generated, whose effectiveness of operation is evaluated later. It should be noted that the generated combination may include one or more methods for analysis of a gene. At steps 340 and 350, the level of successful detections and level of false positive detections are determined for each combination of methods in order to measure at step 360 their effectiveness with respect to each type of object. **Fig. 12** shows an example chart of effectiveness of different combinations of analysis methods. Then, the effectiveness values of different combinations are compared at step 370, and the most effective combination of methods is selected for analysis of different types of objects. Thus, based on the file type of unknown object being analyzed, e.g., an executable file, script, postscript document, etc., the most effective combination of analysis methods is selected and only genes associated with the selected method(s) are generated.

It should be noted that the effectiveness of the combinations of malware analysis methods can be periodically reevaluated, which will provide more relevant information on their confidence level and consequently will increase the quality of detection for unknown malware.

Furthermore, with the appearance of unknown genes of different file types, some nominal values of effectiveness for the associated malware analysis methods may be entered into the database. As additional information about the new genes is collected, the effectiveness of malware analysis methods used to analyses this type of object can be reevaluated.

Such situations can also arise when new file types appear and when the analysis of existing genes does not give adequate results. This means that a large number of cases exist in which analysis of known genes give an erroneous result. With the appearance of object of a new file type, the need may arise for generating new types of genes associated with this new file type.

In one example embodiment, the databases containing information about malicious and clean genomes may also be subjected to periodic reevaluation. In particular, the scope of coverage of a plurality of malicious programs by individual genes may be reevaluated. Scope of coverage means the percentage of malicious objects which are revealed with the aid of one gene. As it has been pointed out above, the effectiveness of combinations of processing methods can change over time; this is also true for the scope of coverage. For the evaluation of such changes, the average scope of coverage of a plurality of malicious objects by genes may be calculated as the arithmetic mean of all scopes of coverage of the specified set of genes. Here, a decrease in the calculated value may evidence a reduction in the effectiveness of the malware analysis methods used in analysis of genes as well as a need to change the rules for adding new genes.

**Fig. 4** illustrates an example process of selecting a computer which, based on its characteristics, is capable of processing an object genome. In one example embodiment, information can be stored on a central server for the parameters of computers in the network and the statistics on the time and duration of their operation. For example, the entire set of network computers can be divided into groups based on their productivity level. Furthermore, depending on the resource-intensiveness of the method selected in step 130, the subset of computers with the required characteristics is determined. Then the subset is narrowed down once more by determining the level of network accessibility. Here network accessibility is understood to be the period of time the computer remains in the network, its load level, the bandwidth of the communication channels, etc. Here, if the object required could not been found among the users' computers, a remote server of an antivirus company can be used in the role of the analyzing computer. If the number of computers satisfying the specified criteria is large, only some subset of them can be selected. Let us suppose, for example, that it is required to find a computer with average characteristics for analyzing some software object. **Fig. 4** shows a set of computers with specified parameters, including computer 2 and computer 3. Here, only one of them, computer 3, has an average level of network accessibility, i.e. the probability of receiving a response from it is higher than for computer 2. Consequently, in this example, only computer 3 can be selected for analyzing the unknown object genome.

**Fig. 5** illustrates example architecture of a computer system for implementing the process 300 for determining the most effective combination of methods for analyzing unknown objects and their corresponding genes for presence of malware. The system 500 includes a plurality of software modules executable by a processor and databases stored in a local or remote memory. In particular, system 500 includes a module 510 for generating different genes from known malicious objects stored in database 520 and known clean objects stored in database 530. System 500 also contains module 540 for forming different combination of malware analysis methods based on file types of the objects. The possible combination of methods may be represented as a set {Gene1: Method1, Gene2: Method5, Gene7: Methodl 1, ...}. The system 500 also includes module 550 for computing the level of successful detections of known malicious objects and module 560 for computing the level of false positive detections of different types of the known malicious and clean objects from databases 520 and 530, respectively. The system 500 also includes module 570 for measuring effectiveness of the combinations of malware analysis methods based on data obtained from modules 550 and 560. Furthermore, the system 500 includes module 580 for selecting the most effective combination of malware analysis methods for each file type of software object.

**Fig. 6** illustrates one example embodiment of a computer system 5, such as a personal computer (PC) or an application server, suitable for implementing system 500. As shown, computer system 5 may include one or more processors 15, memory 20, one or more hard disk drive(s) 30, optical drive(s) 35, serial port(s) 40, graphics card 45, audio card 50 and network card(s) 55 connected by system bus 10. System bus 10 may be any of several types of bus structures including a memory bus or memory controller, a peripheral bus and a local bus using any of a variety of known bus architectures. Processor 15 may include one or more Intel® Core 2 Quad 2.33 GHz processors or other type of general purpose microprocessor.

System memory 20 may include a read-only memory (ROM) 21 and random access memory (RAM) 23. Memory 20 may be implemented as in DRAM (dynamic RAM), EPROM, EEPROM, Flash or other type of memory architecture. ROM 21 stores a basic input/output system 22 (BIOS), containing the basic routines that help to transfer information between the components of computer system 5, such as during start-up. RAM 23 stores operating system 24 (OS), such as Windows® XP Professional or other type of operating system, that is responsible for management and coordination of processes and allocation and sharing of hardware resources in computer system 5. System memory 20 also stores applications and programs 25, such as services 306. System memory 20 also stores various runtime data 26 used by programs 25 as well as various databases of information about known malicious and clean objects.

Computer system 5 may further include hard disk drive(s) 30, such as SATA magnetic hard disk drive (HDD), and optical disk drive(s) 35 for reading from or writing to a removable optical disk, such as a CD-ROM, DVD-ROM or other optical media. Drives 30 and 35 and their associated computer-readable media provide non-volatile storage of computer readable instructions, data structures, databases, applications and program modules/subroutines that implement algorithms and methods disclosed herein. Although the exemplary computer system 5 employs magnetic and optical disks, it should be appreciated by those skilled in the art that other types of computer readable media that can store data accessible by a computer system 5, such as magnetic cassettes, flash memory cards, digital video disks, RAMs, ROMs, EPROMs and other types of memory may also be used in alternative embodiments of the computer system.

Computer system 5 further includes a plurality of serial ports 40, such as Universal Serial Bus (USB), for connecting data input device(s) 75, such as keyboard, mouse, touch pad and other. Serial ports 40 may be also be used to connect data output device(s) 80, such as printer, scanner and other, as well as other peripheral device(s) 85, such as external data storage devices and the like. System 5 may also include graphics card 45, such as nVidia® GeForce® GT 240M or other video card, for interfacing with a monitor 60 or other video reproduction device. System 5 may also include an audio card 50 for reproducing sound via internal or external speakers 65. In addition, system 5 may include network card(s) 55, such as Ethernet, WiFi, GSM, Bluetooth or other wired, wireless, or cellular network interface for connecting computer system 5 to network 70, such as the Internet.

**Fig. 7** illustrates an example of a portion of the execution path gene of a worm program. At stage 710, the network address of the computer system is defined by its name, and the line "mx1.mail.yahoo.com" is transmitted as a parameter. Then, at stage 720, an attempt is made to establish a connection with it, which is completed successfully. After that, the receipt of data 730 is accomplished, and then at stage 740, the length of that data is calculated, which is then sent to stage 750. Thus, it becomes clear from the execution path of the program what functions and with what parameters are being called out during program execution, which turns out to be useful for analysis of maliciousness of the program.

**Fig. 8** illustrates an example program flowchart gene of a Trojan-horse program. As shown, the vertices are a set of assembler functions executed before JMP instruction. Two peaks are connected by an edge when and only when there is a call from one of them to the other. Here both unconditional 810 and conditional 820 transitions can be noted. For the conditional transition 820, there always exists a certain assumption which is either fulfilled or not. For example, the record "jnz short loc_40686B" means a transition to the area loc_40686B if the value of the flag ZF is different from zero.

**Fig. 9** illustrates a portion of a function call- graph of a worm program. In this case, the peaks are certain procedures or functions of a high-level language, for example "Open file". It is possible to separate from them standard or API functions 920, as well as unique ones 910, which were written by the actual programmer for himself. The edge connects two peaks if there is a call from the one function to the other. For example, within the function Sub_401463, the functions RegQueryValueExA, Sub_401031, RegCloseKey, etc. are called out, i.e. there are edges to RegQueryValueExA, Sub_401031 and to RegCloseKey from the peak Sub_401463.

**Fig. 10** illustrates an example operational area gene of an executable file. In one example embodiment, the header, address in random access memory at which the execution of the program starts (the entry point), the pointer to the main function, and the pointer to the end of the execution are selected as the representative information elements of the file for inclusion in the gene. Furthermore, before and after the specified portions, 4 kB each of data are taken, respectively. Thus, 32 kB of information are generated which are stored in random access memory, and further work occurs with it. Such an approach minimizes the time for processing the file, since direct access to the object on the hard drive is a very slow operation in the computer, while operating with the random access memory is substantially faster.

**Fig. 11** illustrates a structure of an operational area gene for a PDF file. The format being described implies the presence of a header 1110 which starts with '%PDF'. Further, there is a list of the passive and active content in file 1120 for which is specified, among other things, their number and type, as well as the method with which it was coded. The end of each object is designated by a special mark. In the cross-reference table 1130, references are indicated to other content within the document, and in the next section 1140, rules are prescribed for decoding this table. Area 1150 shows the end of the document, which is marked with a sequence of %EOF' symbols.

**Fig. 12** illustrates an example of determining the effectiveness of malware analysis methods used in analysis of unknown objects. The effectiveness value is assigned to be between 0 and 1. In one example embodiment, this value can be determined empirically. For example, a set of malicious and clean objects of a specified type is considered and genes required for each element of the set are generated. Then, genes are analyzed using selected methods. Based on the processing results, a decision is made as to whether the object is malicious. Thus, in the last step, we obtain a set X of objects identified as malicious. Then the effectiveness of processing of an unknown object can be calculated from the following formula:

$$k = \begin{cases} \frac{|X^b|}{B} - \frac{|X^w|}{W}, & \text{if } \frac{|X^b|}{B} - \frac{|X^w|}{W} \geq 0, \\ & \text{otherwise} \end{cases}$$

where $k$ is the effectiveness of the method of processing an unknown object,

$|X^b|$ - the number of malicious objects identified as malicious,

$|X^w|$ -the number of clean objects identified as malicious, and

$B$ and $W$ - the specified number of malicious and clean objects, respectively.

As was noted previously, the described process for determining effectiveness of malware analysis methods can be executed periodically to generate the most current evaluations.

**Fig. 13A** illustrates an example of deception by the method of line-by-line comparison of two malicious objects. Shown are two sets of code lines of two Trojan-horse programs, which have the same functional, but different file names. Thus, both objects perform similar malicious actions, but when their code lines are compared for exact match, it is determined that practically all lines are different. Thus, if the exact line-by-line comparison does not give a positive result, approximate string matching described above may be used.

**Fig. 13B** illustrates an example of code obfuscation that prevents detection of a malicious object using analysis of function call charts of the program. In the specified list of functions being called, criminals have included dummy code that does not affect the end result of the program. The direct comparison of the provided function call charts fails to identify the program as known malware because the function call charts are too dissimilar. Therefore such garbage instructions make the use of the call chart analysis difficult for detecting unknown malware, and other malware analysis methods should be used.

**Fig. 14** illustrates an example of the operation of combination **1430** of two methods for analysis of genes, **1410** and **1420**, respectively. Here the level of successful detection of unknown malicious objects is placed along the ordinate and the level of false positive detections is placed along the abscissa. Thus, malware analysis method **1410** for gene A and malware analysis method **1420** for gene B individually do not have a high effectiveness, but there are situations when the effectiveness of their joint application **1430** significantly exceeds the effectiveness of each of the two methods individually and their combined effectiveness.

In various embodiments, the algorithms and methods described herein may be implemented in hardware, software, firmware, or any combination thereof. If implemented in software, the functions may be stored as one or more instructions or code on a non-transitory computer-readable medium. Computer-readable medium includes both computer storage and communication medium that facilitates transfer of a computer program from one place to another. A storage medium may be any available media that can be accessed by a computer. By way of example, and not limitation, such computer-readable medium can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave are included in the definition of medium.

In the interest of clarity, not all of the routine features of the embodiments are shown and described herein. It will be appreciated that in the development of any such actual implementation, numerous implementation-specific decisions must be made in order to achieve the developer's specific goals, and that these specific goals will vary from one implementation to another and from one developer to another. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of limitation, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various embodiments disclosed herein encompass present and future known equivalents to the known components referred to herein by way of illustration. Moreover, while embodiments and applications have been shown and described, it would be apparent to those skilled in the art having the benefit of this disclosure that many more modifications than mentioned above are possible without departing from the inventive concepts disclosed herein.

## Claims

**1.** A computer-implemented method for detecting unknown malware, the method comprising:

generating, by a hardware processor (15), one or more different object genes for a plurality of known clean objects and known malicious objects of a plurality of different file types, wherein an object gene is a data structure containing a plurality of information elements retrieved from an object and wherein different object genes contain different types of information elements characteristic of each of the plurality of different file types;
forming, by the hardware processor (15), different combinations of malware analysis methods for analyzing the one or more different object genes of the plurality of known clean and malicious objects, wherein a combination of malware analysis methods includes at least two different malware analysis methods;
determining for each combination of malware analysis methods a level $\left(\frac{|X^b|}{B}\right)$ of successful malware detections of the known malicious objects, wherein B is the number of known malicious objects with respect to each of the plurality of different file types, and $|X^b|$ is the number of known malicious objects identified by each combination of malware analysis methods asmalicious for each of the plurality of different file types ;
determining for each combination of malware analysis methods a level $\left(\frac{|X^w|}{W}\right)$, of false positive detections of the known clean objects, wherein *W* is the number of known clean objects with respect to each of the plurality of different file types, and $|X^w|$ is the number of known clean objects identified by each combination of malware analysis methods as malicious for each of the plurality of different file types;
determining an effectiveness value *k* for each combination of malware analysis methods with respect to each of the plurality of different file types using the following equation:

$$k = \begin{cases} \frac{|X^b|}{B} - \frac{|X^w|}{W}, & \text{if } \frac{|X^b|}{B} - \frac{|X^w|}{W} \geq 0, \\ 0, & \text{otherwise} \end{cases}$$

selecting, based on a comparison of the determined effectiveness values (k), a most effective combination of malware analysis methods for each of the plurality of different file types;
selecting, based on the file type of an unknown object, the most effective combination of malware analysis methods, for analyzing the unknown object for presence of malware;
generating, on the basis of the selected combination of malware analysis methods, corresponding object genes from the unknown object; and
analyzing each one of the generated object genes of the unknown object using the selected most effective combination of malware analysis methods to determine whether the unknown object is clean or malicious.

**2.** The method of claim 1, further comprising:

determining resource-intensiveness of each selected malware analysis method;
analyzing one of the generated object genes of the unknown object initially using the least resource intensive of the selected malware analysis methods to determine whether the unknown object is clean or malicious; and
analyzing one or more of the other generated object genes of the unknown object using more resource intensive of the selected malware analysis methods to determine whether the unknown object is clean or malicious only when the least resource-intensive of the selected malware analysis methods fails to determine if the unknown object is clean or malicious.

**3.** The method of claim 1, wherein an object gene for each malware analysis method is selected from one of unique lines of code of the unknown object, operational areas of the unknown object, execution path of the unknown object, behavior pattern of the unknown object, program flowchart of the unknown object, or function call graph of the unknown object.

**4.** The method of claim 1, further comprising selecting out of a plurality of available computers (20) a most efficient computer (20) for analyzing the unknown object for presence of malware.

**5.** The method of claim 4, wherein the most efficient computer (20) is selected based on one or more of the following factors: productivity of available computers (20), network accessibility of available computers (20) and resource-intensiveness of the selected malware analysis methods.

**6.** The method of claim 1, wherein analyzing an object gene using the malware analysis methods further comprises one or more of:

performing a behavior pattern analysis by comparing a behavior pattern gene of the unknown object with behavior patterns of known malicious or clean objects;
performing an exact match analysis of a pattern of information elements of the object gene with patterns of information elements associated with known malicious or clean objects;
performing an approximate string matching of the information elements of the object gene with patterns of information elements associated with known malicious or clean objects;
performing a security rating analysis of the information elements of the object gene by separately evaluating maliciousness of separate logical blocks of the information elements.

**7.** A computer-based system (5, 500) for detecting unknown malware, the system (5, 500) comprising:

a memory (20) configured to store an unknown software object; and
a processor (15) coupled to the memory (20) and configured to:

generate one or more different object genes for a plurality of known clean objects and known malicious objects of a plurality of different file types, wherein an object gene is a data structure containing a plurality of information elements retrieved from an object, and wherein different object genes contain different types of information elements characteristic of each of the plurality of different file types;
form different combinations of malware analysis methods for analyzing the one or more different object genes of the plurality of known clean and malicious objects, wherein a combination of malware analysis methods includes at least two different malware analysis methods;
determine for each combination of malware analysis methods a level $\left(\frac{|X^b|}{B}\right)$ of successful malware detections of the known malicious objects, wherein B is the number of known malicious objects with respect to each of the plurality of different file types, and $|X^b|$ is the number of known malicious objects identified by each combination of malware analysis method as malicious for each of the plurality of different file types;

determine for each combination of malware analysis methods a level $\left(\frac{|X^w|}{W}\right)$, of false positive detections of known clean objects, wherein $W$ is the number of known clean objects with respect to each of the plurality of different file types, and $|X^w|$ is the number of known clean objects identified by each combination of malware analysis methods as malicious for each of the plurality of different file types;

determine an effectiveness value k for each combination of malware analysis methods for each of the plurality of different file types using the following equation:

$$k = \begin{cases} \frac{|X^b|}{B} - \frac{|X^w|}{W}, & \text{if} \quad \frac{|X^b|}{B} - \frac{|X^w|}{W} \geq 0, \\ 0, & \text{otherwise} \end{cases}$$

select, based on a comparison of the determined effectiveness values ($k$), a most effective combination of malware analysis methods for each of the plurality of different file types;

select, based on the file type of an unknown object, the most effective combination of malware analysis methods, for analyzing the unknown object for presence of malware;

generate, on the basis of the selected combination of malware analysis methods, corresponding object genes from the unknown object; and

analyze each one of the generated object genes of the unknown object using the selected most effective combination of malware analysis methods to determine whether the unknown object is clean or malicious.

**8.** The system (5, 500) of claim 7, wherein the processor (15) is further configured to:

determine resource-intensiveness of each selected malware analysis method;

analyze one of the generated object genes of the unknown object initially using the least resource intensive of the selected malware analysis methods to determine whether the unknown object is clean or malicious; and

analyze one or more of the other generated object genes of the unknown object using more resource intensive of the selected malware analysis methods to determine whether the unknown object is clean or malicious only when the least resource-intensive of the selected malware analysis methods fails to determine if the unknown object is clean or malicious.

**9.** The system (5, 500) of claim 7, wherein the processor (15) is further configured to select out of a plurality of available computers (20) a most efficient computer (20) for analyzing the unknown object for presence of malware

**10.** The system (5, 500) of claim 9, wherein the most efficient computer (20) is selected based on one or more of the following factors: productivity of available computers (20), network accessibility of available computers (20) and resource-intensiveness of the selected malware analysis methods.

**11.** The system (5, 500) of claim 7, wherein an object gene for each malware analysis method is selected from one of unique lines of code of the unknown object, operational areas of the unknown object, execution path of the unknown object, behavior pattern of the unknown object, program flowchart of the unknown object, or function call graph of the unknown object.

**12.** The system (5, 500) of claim 7, wherein to analyze an object gene using the malware analysis methods, the processor (15) is further configured to perform one or more of:

a behavior pattern analysis by comparing a behavior pattern gene of the unknown object with behavior patterns of known malicious or clean objects;

an exact match analysis of a pattern of information elements of the object gene with patterns of information elements associated with known malicious or clean objects;

an approximate string matching of the information elements of the object gene with patterns of information elements associated with known malicious or clean objects; and
a security rating analysis of the information elements of the object gene by separately evaluating maliciousness of separate logical blocks of the information elements.

**13.** A computer program product embedded in a non-transitory computer-readable storage medium (25), the computer-readable storage medium (25) comprising computer-executable instructions for detecting unknown malware, wherein the medium comprises instructions for:

generating one or more different object genes for a plurality of known clean objects and known malicious objects of a plurality of different file types, wherein an object gene is a data structure containing a plurality of information elements retrieved from an object, and wherein different object genes contain different types of information elements characteristic of each of the plurality of different file types;
forming different combinations of malware analysis methods for analyzing the one or more different object genes of the plurality of known clean and malicious objects, wherein a combination of malware analysis methods includes at least two different malware analysis methods;
determining for each combination of malware analysis methods a level $\left(\frac{|X^b|}{B}\right)$ of successful malware detections of the known malicious objects, wherein *B* is the number of known malicious objects with respect to each of the plurality of different file types, and $|X^b|$ is the number of known malicious objects identified by each combination of malware analysis method as malicious for the plurality of different file types;
determining for each combination of malware analysis methods a level $\left(\frac{|X^w|}{W}\right)$, of false positive detections of the known clean objects, wherein *W* is the number of known clean objects with respect to each of the plurality of different file types, and $|X^w|$ is the number of known clean objects identified by each combination of malware analysis methods as malicious for each of the plurality of different file types;
determining an effectiveness value *k* for each combination of malware analysis methods with respect to each of the plurality of different file types using the following equation:

$$k = \begin{cases} \frac{|X^b|}{B} - \frac{|X^w|}{W}, & \text{if } \frac{|X^b|}{B} - \frac{|X^w|}{W} \geq 0, \\ 0, & \text{otherwise} \end{cases}$$

selecting, based on a comparison of the determined effectiveness values *k,* a most effective combination of malware analysis methods for each of the plurality of different file types;
selecting, based on the file type of an unknown object, the most effective combination of malware analysis methods, for analyzing the unknown object for presence of malware;
generating, on the basis of the selected combination of malware analysis methods, corresponding object genes from the unknown object; and
analyzing each one of the generated object genes of the unknown object using the selected most effective combination of malware analysis methods to determine whether the unknown object is clean or malicious.

**14.** The product of claim 13, further comprising instructions for:

determining resource-intensiveness of each selected malware analysis method;
analyzing one of the generated object genes of the unknown object initially using the least resource intensive of the selected malware analysis methods to determine whether the unknown object is clean or malicious; and
analyzing one or more of the other generated object genes of the unknown object using more resource intensive of the selected malware analysis methods to determine whether the unknown object is clean or malicious only when the least resource-intensive of the selected malware analysis methods fails to determine if the unknown object is clean or malicious.

**15.** The product of claim 13, wherein an object gene for each malware analysis method is selected from one of unique lines of code of the unknown object, operational areas of the unknown object, execution path of the unknown object, behavior pattern of the unknown object, program flowchart of the unknown object, or function call graph of the unknown object.

## Patentansprüche

**1.** Computerimplementiertes Verfahren zur Erfassung unbekannter Schadsoftware, wobei das Verfahren umfasst:

Erzeugen eines oder mehrerer unterschiedlicher Objektgene für eine Vielzahl von bekannten sauberen Objekten und bekannten schädlichen Objekten einer Vielzahl unterschiedlicher Dateitypen durch einen Hardwareprozessor (15), wobei ein Objektgen eine Datenstruktur ist, die eine Vielzahl von aus einem Objekt abgerufenen Informationselementen enthält, und wobei unterschiedliche Objektgene unterschiedliche Typen von Informationselementen enthalten, die für jeden der Vielzahl unterschiedlicher Dateitypen charakteristisch sind;
Bilden von unterschiedlichen Kombinationen von Schadsoftware-Analyseverfahren zum Analysieren des einen oder der mehreren unterschiedlichen Objektgene der Vielzahl von bekannten sauberen und schädlichen Objekten durch den Hardwareprozessor (15), wobei eine Kombination von Schadsoftware-Analyseverfahren wenigstens zwei unterschiedliche Schadsoftware-Analyseverfahren einschließt;
Bestimmen eines Niveaus $\left(\frac{|X^b|}{B}\right)$ erfolgreicher Schadsoftware-Erfassungen der bekannten schädlichen Objekte für jede Kombination von Schadsoftware-Analyseverfahren, wobei *B* die Anzahl bekannter schädlicher Objekte bezüglich jedes der Vielzahl unterschiedlicher Dateitypen ist, und $|X^b|$ die Anzahl bekannter schädlicher Objekte ist, die durch jede Kombination von Schadsoftware-Analyseverfahren für jeden der Vielzahl unterschiedlicher Dateitypen als schädlich identifiziert wurde;
Bestimmen eines Niveaus $\left(\frac{|X^w|}{W}\right)$ falscher positiver Erfassungen der bekannten sauberen Objekte für jede Kombination von Schadsoftware-Analyseverfahren, wobei *W* die Anzahl bekannter sauberer Objekte bezüglich jedes der Vielzahl unterschiedlicher Dateitypen ist, und $|X^w|$ die Anzahl bekannter sauberer Objekte ist, die durch jede Kombination von Schadsoftware-Analyseverfahren für jeden der Vielzahl unterschiedlicher Dateitypen als schädlich identifiziert wurde;
Bestimmen eines Effektivitätswerts *k* für jede Kombination von Schadsoftware-Analyseverfahren bezüglich jedes der Vielzahl unterschiedlicher Dateitypen unter Verwendung der folgenden Gleichung:

$$k = \begin{cases} \frac{|X^b|}{B} - \frac{|X^w|}{W}, \mathit{falls} \frac{|X^b|}{B} - \frac{|X^w|}{W} \geq 0, \\ \mathit{andernfalls}\ 0 \end{cases}$$

Auswählen, basierend auf einem Vergleich der bestimmten Effektivitätswerte (*k*), einer effektivsten Kombination von Schadsoftware-Analyseverfahren für jeden der Vielzahl unterschiedlicher Dateitypen;
Auswählen, basierend auf dem Dateityp eines unbekannten Objekts, der effektivsten Kombination von Schadsoftware-Analyseverfahren zum Analysieren des unbekannten Objekts hinsichtlich des Vorhandenseins von Schadsoftware;
Erzeugen, auf der Basis der ausgewählten Kombination von Schadsoftware-Analyseverfahren, entsprechender Objektgene aus dem unbekannten Objekt; und
Analysieren jedes der erzeugten Objektgene des unbekannten Objekts unter Verwendung der ausgewählten effektivsten Kombination von Schadsoftware-Analyseverfahren, um zu bestimmen, ob das unbekannte Objekt sauber oder schädlich ist.

**2.** Verfahren nach Anspruch 1, weiterhin umfassend:

Bestimmen der Ressourcenintensivität jedes ausgewählten Schadsoftware-Analyseverfahrens;

Analysieren eines der erzeugten Objektgene des unbekannten Objekts anfänglich unter Verwendung des am wenigsten ressourcenintensiven der ausgewählten Schadsoftware-Analyseverfahren, um zu bestimmen, ob das unbekannte Objekt sauber oder schädlich ist; und
Analysieren eines oder mehrerer der anderen erzeugten Objektgene des unbekannten Objekts unter Verwendung von ressourcenintensiveren der ausgewählten Schadsoftware-Analyseverfahren, um zu bestimmen, ob das unbekannte Objekt sauber oder schädlich ist, nur dann, wenn es der am wenigstens ressourcenintensiven der ausgewählten Schadsoftware-Analyseverfahren nicht gelingt, zu bestimmen, ob das unbekannte Objekt sauber oder schädlich ist.

3. Verfahren nach Anspruch 1, wobei ein Objektgen für jedes Schadsoftware-Analyseverfahren aus einem von einzigartigen Code-Zeilen des unbekannten Objekts, Arbeitsbereichen des unbekannten Objekts, einem Ausführungspfad des unbekannten Objekts, einem Verhaltensmuster des unbekannten Objekts, einem Programmablaufplan des unbekannten Objekts oder einem Funktionsaufrufgraphen des unbekannten Objekts ausgewählt wird.

4. Verfahren nach Anspruch 1, das weiterhin umfasst, dass aus einer Vielzahl von verfügbaren Computern (20) ein effizientester Computer (20) für das Analysieren des unbekannten Objekts hinsichtlich des Vorhandenseins von Schadsoftware ausgewählt wird.

5. Verfahren nach Anspruch 4, wobei der effizienteste Computer (20) basierend auf einem oder mehreren der folgenden Faktoren ausgewählt wird: einer Produktivität von verfügbaren Computern (20), einer Netzwerkzugriffsfähigkeit von verfügbaren Computern (20) und einer Ressourcenintensivität der ausgewählten Schadsoftware-Analyseverfahren.

6. Verfahren nach Anspruch 1, wobei das Analysieren eines Objektgens unter Verwendung der Schadsoftware-Analyseverfahren weiterhin eines oder mehrere umfasst von:

Durchführen einer Verhaltensmusteranalyse durch Vergleichen eines Verhaltensmustergens des unbekannten Objekts mit Verhaltensmustern von bekannten schädlichen oder sauberen Objekten;
Durchführen einer Analyse hinsichtlich genauer Übereinstimmung eines Musters von Informationselementen des Objektgens mit Mustern von Informationselementen, die mit bekannten schädlichen oder sauberen Objekten assoziiert sind;
Durchführen eines ungefähren String-Abgleichs der Informationselemente des Objektgens mit Mustern von Informationselementen, die mit bekannten schädlichen oder sauberen Objekten assoziiert sind;
Durchführen einer Sicherheitseinstufungsanalyse der Informationselemente des Objektgens durch separate Evaluierung der Schädlichkeit von separaten logischen Blöcken der Informationselemente.

7. Computerbasiertes System (5, 500) zur Erfassung unbekannter Schadsoftware, wobei das System (5, 500) umfasst:

einen Speicher (20), der dazu konfiguriert ist, ein unbekanntes Software-Objekt zu speichern; und
einen mit dem Speicher (20) verbundenen Prozessor (15), der dazu konfiguriert ist:

für eine Vielzahl von bekannten sauberen Objekten und bekannten schädlichen Objekten einer Vielzahl unterschiedlicher Dateitypen eines oder mehrere unterschiedliche Objektgene zu erzeugen, wobei ein Objektgen eine Datenstruktur ist, die eine Vielzahl von aus einem Objekt abgerufenen Informationselementen enthält, und wobei unterschiedliche Objektgene unterschiedliche Typen von Informationselementen enthalten, die für jeden der Vielzahl unterschiedlicher Dateitypen charakteristisch sind;
unterschiedliche Kombinationen von Schadsoftware-Analyseverfahren zum Analysieren des einen oder der mehreren unterschiedlichen Objektgene der Vielzahl von bekannten sauberen und schädlichen Objekten zu bilden, wobei eine Kombination von Schadsoftware-Analyseverfahren wenigstens zwei unterschiedliche Schadsoftware-Analyseverfahren einschließt;
für jede Kombination von Schadsoftware-Analyseverfahren ein Niveau $\left(\frac{|X^b|}{B}\right)$ erfolgreicher Schadsoftware-Erfassungen der bekannten schädlichen Objekte zu bestimmen, wobei *B* die Anzahl bekannter schädlicher Objekte bezüglich jedes der Vielzahl unterschiedlicher Dateitypen ist, und $|X^b|$ die Anzahl bekannter schädlicher Objekte ist, die durch jede Kombination von Schadsoftware-Analyseverfahren für jeden der Vielzahl unterschiedlicher Dateitypen als schädlich identifiziert wurde;

für jede Kombination von Schadsoftware-Analyseverfahren ein Niveau $\left(\frac{|X^w|}{W}\right)$ falscher positiver Erfassungen der bekannten sauberen Objekte zu bestimmen, wobei *W* die Anzahl bekannter sauberer Objekte bezüglich jedes der Vielzahl unterschiedlicher Dateitypen ist, und $|X^w|$ die Anzahl bekannter sauberer Objekte ist, die durch jede Kombination von Schadsoftware-Analyseverfahren für jeden der Vielzahl unterschiedlicher Dateitypen als schädlich identifiziert wurde;
für jede Kombination von Schadsoftware-Analyseverfahren bezüglich jedes der Vielzahl unterschiedlicher Dateitypen unter Verwendung der folgenden Gleichung einen Effektivitätswert *k* zu bestimmen:

$$k = \begin{cases} \frac{|X^b|}{B} - \frac{|X^w|}{W}, \mathit{falls} \frac{|X^b|}{B} - \frac{|X^w|}{W} \geq 0, \\ \mathit{andernfalls}\ 0 \end{cases}$$

basierend auf einem Vergleich der bestimmten Effektivitätswerte (*k*) eine effektivste Kombination von Schadsoftware-Analyseverfahren für jeden der Vielzahl unterschiedlicher Dateitypen auszuwählen;
basierend auf dem Dateityp eines unbekannten Objekts die effektivste Kombination von Schadsoftware-Analyseverfahren zum Analysieren des unbekannten Objekts hinsichtlich des Vorhandenseins von Schadsoftware auszuwählen;
auf der Basis der ausgewählten Kombination von Schadsoftware-Analyseverfahren entsprechende Objektgene aus dem unbekannten Objekt zu erzeugen; und
jedes der erzeugten Objektgene des unbekannten Objekts unter Verwendung der ausgewählten effektivsten Kombination von Schadsoftware-Analyseverfahren zu analysieren, um zu bestimmen, ob das unbekannte Objekt sauber oder schädlich ist.

**8.** System (5, 500) nach Anspruch 7, wobei der Prozessor (15) weiterhin dazu konfiguriert ist:

die Ressourcenintensivität jedes ausgewählten Schadsoftware-Analyseverfahrens zu bestimmen;
eines der erzeugten Objektgene des unbekannten Objekts anfänglich unter Verwendung des am wenigsten ressourcenintensiven der ausgewählten Schadsoftware-Analyseverfahren zu analysieren, um zu bestimmen, ob das unbekannte Objekt sauber oder schädlich ist; und
eines oder mehrere der anderen erzeugten Objektgene des unbekannten Objekts unter Verwendung von ressourcenintensiveren der ausgewählten Schadsoftware-Analyseverfahren zu analysieren, um zu bestimmen, ob das unbekannte Objekt sauber oder schädlich ist, nur dann, wenn es der am wenigstens ressourcenintensiven der ausgewählten Schadsoftware-Analyseverfahren nicht gelingt, zu bestimmen, ob das unbekannte Objekt sauber oder schädlich ist.

**9.** System (5, 500) nach Anspruch 7, wobei der Prozessor (15) weiterhin dazu konfiguriert ist, aus einer Vielzahl von verfügbaren Computern (20) einen effizientesten Computer (20) für das Analysieren des unbekannten Objekts hinsichtlich des Vorhandenseins von Schadsoftware auszuwählen.

**10.** System (5, 500) nach Anspruch 9, wobei der effizienteste Computer (20) basierend auf einem oder mehreren der folgenden Faktoren ausgewählt wird: einer Produktivität von verfügbaren Computern (20), einer Netzwerkzugriffsfähigkeit von verfügbaren Computern (20) und einer Ressourcenintensivität der ausgewählten Schadsoftware-Analyseverfahren.

**11.** System (5, 500) nach Anspruch 7, wobei ein Objektgen für jedes Schadsoftware-Analyseverfahren aus einem von einzigartigen Code-Zeilen des unbekannten Objekts, Arbeitsbereichen des unbekannten Objekts, einem Ausführungspfad des unbekannten Objekts, einem Verhaltensmuster des unbekannten Objekts, einem Programmablaufplan des unbekannten Objekts oder einem Funktionsaufrufgraphen des unbekannten Objekts ausgewählt wird.

**12.** System (5, 500) nach Anspruch 7, wobei zum Analysieren eines Objektgens unter Verwendung der Schadsoftware-Analyseverfahren der Prozessor (15) weiterhin dazu konfiguriert ist, eines oder mehrere durchzuführen von:

einer Verhaltensmusteranalyse durch Vergleichen eines Verhaltensmustergens des unbekannten Objekts mit Verhaltensmustern von bekannten schädlichen oder sauberen Objekten;
einer Analyse hinsichtlich genauer Übereinstimmung eines Musters von Informationselementen des Objektgens mit Mustern von Informationselementen, die mit bekannten schädlichen oder sauberen Objekten assoziiert sind;
eines ungefähren String-Abgleichs der Informationselemente des Objektgens mit Mustern von Informationselementen, die mit bekannten schädlichen oder sauberen Objekten assoziiert sind; und
einer Sicherheitseinstufungsanalyse der Informationselemente des Objektgens durch separate Evaluierung der Schädlichkeit von separaten logischen Blöcken der Informationselemente.

**13.** Computerprogrammprodukt, das in ein nichtflüchtiges computerlesbares Speichermedium (25) eingebettet ist, wobei das computerlesbare Speichermedium (25) computerausführbare Instruktionen zur Erfassung unbekannter Schadsoftware umfasst, wobei das Medium Instruktionen umfasst zum:

Erzeugen eines oder mehrerer unterschiedlicher Objektgene für eine Vielzahl von bekannten sauberen Objekten und bekannten schädlichen Objekten einer Vielzahl unterschiedlicher Dateitypen, wobei ein Objektgen eine Datenstruktur ist, die eine Vielzahl von aus einem Objekt abgerufenen Informationselementen enthält, und wobei unterschiedliche Objektgene unterschiedliche Typen von Informationselementen enthalten, die für jeden der Vielzahl unterschiedlicher Dateitypen charakteristisch sind;
Bilden von unterschiedlichen Kombinationen von Schadsoftware-Analyseverfahren zum Analysieren des einen oder der mehreren unterschiedlichen Objektgene der Vielzahl von bekannten sauberen und schädlichen Objekten, wobei eine Kombination von Schadsoftware-Analyseverfahren wenigstens zwei unterschiedliche Schadsoftware-Analyseverfahren einschließt;
Bestimmen eines Niveaus $\left(\frac{|X^b|}{B}\right)$ erfolgreicher Schadsoftware-Erfassungen der bekannten schädlichen Objekte für jede Kombination von Schadsoftware-Analyseverfahren, wobei *B* die Anzahl bekannter schädlicher Objekte bezüglich jedes der Vielzahl unterschiedlicher Dateitypen ist, und $|X^b|$ die Anzahl bekannter schädlicher Objekte ist, die durch jede Kombination von Schadsoftware-Analyseverfahren für jeden der Vielzahl unterschiedlicher Dateitypen als schädlich identifiziert wurde;
Bestimmen eines Niveaus $\left(\frac{|X^w|}{W}\right)$ falscher positiver Erfassungen der bekannten sauberen Objekte für jede Kombination von Schadsoftware-Analyseverfahren, wobei *W* die Anzahl bekannter sauberer Objekte bezüglich jedes der Vielzahl unterschiedlicher Dateitypen ist, und $|X^w|$ die Anzahl bekannter sauberer Objekte ist, die durch jede Kombination von Schadsoftware-Analyseverfahren für jeden der Vielzahl unterschiedlicher Dateitypen als schädlich identifiziert wurde;
Bestimmen eines Effektivitätswerts k für jede Kombination von Schadsoftware-Analyseverfahren bezüglich jedes der Vielzahl unterschiedlicher Dateitypen unter Verwendung der folgenden Gleichung:

$$k = \begin{cases} \frac{|X^b|}{B} - \frac{|X^w|}{W}, \mathit{falls} \frac{|X^b|}{B} - \frac{|X^w|}{W} \geq 0, \\ \mathit{andernfalls}\ 0 \end{cases}$$

Auswählen, basierend auf einem Vergleich der bestimmten Effektivitätswerte (k), einer effektivsten Kombination von Schadsoftware-Analyseverfahren für jeden der Vielzahl unterschiedlicher Dateitypen;
Auswählen, basierend auf dem Dateityp eines unbekannten Objekts, der effektivsten Kombination von Schadsoftware-Analyseverfahren zum Analysieren des unbekannten Objekts hinsichtlich des Vorhandenseins von Schadsoftware;
Erzeugen, auf der Basis der ausgewählten Kombination von Schadsoftware-Analyseverfahren, entsprechender Objektgene aus dem unbekannten Objekt; und

Analysieren jedes der erzeugten Objektgene des unbekannten Objekts unter Verwendung der ausgewählten effektivsten Kombination von Schadsoftware-Analyseverfahren, um zu bestimmen, ob das unbekannte Objekt sauber oder schädlich ist.

**14.** Produkt nach Anspruch 13, das weiterhin Instruktionen umfasst zum:

Bestimmen der Ressourcenintensivität jedes ausgewählten Schadsoftware-Analyseverfahrens;
Analysieren eines der erzeugten Objektgene des unbekannten Objekts anfänglich unter Verwendung des am wenigsten ressourcenintensiven der ausgewählten Schadsoftware-Analyseverfahren, um zu bestimmen, ob das unbekannte Objekt sauber oder schädlich ist; und
Analysieren eines oder mehrerer der anderen erzeugten Objektgene des unbekannten Objekts unter Verwendung von ressourcenintensiveren der ausgewählten Schadsoftware-Analyseverfahren, um zu bestimmen, ob das unbekannte Objekt sauber oder schädlich ist, nur dann, wenn es der am wenigstens ressourcenintensiven der ausgewählten Schadsoftware-Analyseverfahren nicht gelingt, zu bestimmen, ob das unbekannte Objekt sauber oder schädlich ist.

**15.** Produkt nach Anspruch 13, wobei ein Objektgen für jedes Schadsoftware-Analyseverfahren aus einem von einzigartigen Code-Zeilen des unbekannten Objekts, Arbeitsbereichen des unbekannten Objekts, einem Ausführungspfad des unbekannten Objekts, einem Verhaltensmuster des unbekannten Objekts, einem Programmablaufplan des unbekannten Objekts oder einem Funktionsaufrufgraphen des unbekannten Objekts ausgewählt wird.

**Revendications**

**1.** Procédé mis en oeuvre par ordinateur pour détecter un logiciel malveillant, le procédé consistant à :

générer, par un processeur matériel (15), un ou plusieurs gènes d'objets différents pour une pluralité d'objets non infectés connus et d'objets malveillants connus d'une pluralité de différents types de fichiers, où un gène d'objet est une structure de données contenant une pluralité d'éléments d'informations extraits d'un objet et où différents gènes d'objets contiennent différents types d'éléments d'informations caractéristiques de chacun de la pluralité de différents types de fichiers;
former, par le processeur matériel (15), différentes combinaisons de procédés d'analyses de logiciels malveillants, pour analyser l'un ou plusieurs des gènes d'objets différents de la pluralité d'objets connus, non infectés et malveillants, où une combinaison de procédés d'analyses de logiciels malveillants comprend au moins deux procédés différents d'analyses de logiciels malveillants;

déterminer, pour chaque combinaison de procédés d'analyses de logiciels malveillants, un niveau $\left(\frac{|X^b|}{B}\right)$ de détections - réussies - des objets malveillants connus concernant des logiciels malveillants, où *B* est le nombre d'objets malveillants connus par rapport à chacun de la pluralité des différents types de fichiers, et $|X^b|$ est le nombre d'objets malveillants connus identifiés, par chaque combinaison de procédés d'analyses de logiciels malveillants, comme étant malveillants pour chacun de la pluralité des différents types de fichiers;

déterminer, pour chaque combinaison de procédés d'analyses de logiciels malveillants, un niveau $\left(\frac{|X^w|}{W}\right)$, de détections positives fausses des objets non infectés connus, où *W* est le nombre d'objets non infectés connus, par rapport à chacun de la pluralité des différents types de fichiers, et $|X^w|$ est le nombre d'objets non infectés connus identifiés, par chaque combinaison de procédés d'analyses de logiciels malveillants, comme étant malveillants pour chacun de la pluralité des différents types de fichiers;
déterminer une valeur d'efficacité *k* pour chaque combinaison de procédés d'analyses de logiciels malveillants, par rapport à chacun de la pluralité des différents types de fichiers, en utilisant l'équation suivante :

$$k = \begin{cases} \frac{|X^b|}{B} - \frac{|X^w|}{W}, si \frac{|X^b|}{B} - \frac{|X^w|}{W} \geq 0, \\ autrement 0 \end{cases}$$

sélectionner, en se basant sur une comparaison des valeurs d'efficacité déterminées (*k*), la plus efficace combinaison de procédés d'analyses de logiciels malveillants, pour chacun de la pluralité des différents types de fichiers;
sélectionner, en se basant sur le type de fichiers d'un objet inconnu, la plus efficace combinaison de procédés d'analyses de logiciels malveillants, pour analyser l'objet inconnu afin de détecter la présence d'un logiciel malveillant;
générer, sur la base de la combinaison sélectionnée de procédés d'analyses de logiciels malveillants, des gènes d'objets correspondants à partir de l'objet inconnu; et
analyser chacun des gènes d'objets générés de l'objet inconnu, en utilisant la plus efficace combinaison sélectionnée de procédés d'analyses de logiciels malveillants, pour déterminer si l'objet inconnu est non infecté ou malveillant.

**2.** Procédé selon la revendication 1, consistant en outre à :

déterminer l'intensité de consommation de ressources de chaque procédé d'analyse sélectionné de logiciels malveillants;
analyser l'un des gènes d'objets générés de l'objet inconnu, en utilisant initialement la consommation de ressources la moins intensive parmi les procédés d'analyses sélectionnés de logiciels malveillants, pour déterminer si l'objet inconnu est non infecté ou malveillant; et
analyser un ou plusieurs des autres gènes d'objets générés de l'objet inconnu, en utilisant la consommation de ressources la plus intensive parmi les procédés d'analyses sélectionnés de logiciels malveillants, pour déterminer si l'objet inconnu est non infecté ou malveillant, seulement quand la consommation de ressources la moins intensive parmi les procédés d'analyses sélectionnés de logiciels malveillants ne réussit pas à déterminer si l'objet inconnu est non infecté ou malveillant.

**3.** Procédé selon la revendication 1, dans lequel un gène d'objet pour chaque procédé d'analyse de logiciel malveillant est sélectionné parmi une des lignes uniques de code de l'objet inconnu, des zones opérationnelles de l'objet inconnu, un trajet d'exécution de l'objet inconnu, un type de comportement de l'objet inconnu, un organigramme de programmation de l'objet inconnu ou un graphe d'appel de fonction de l'objet inconnu.

**4.** Procédé selon la revendication 1, consistant en outre à sélectionner parmi une pluralité d'ordinateurs disponibles (20), l'ordinateur (20) le plus efficace pour analyser l'objet inconnu afin de détecter la présence d'un logiciel malveillant.

**5.** Procédé selon la revendication 4, dans lequel l'ordinateur (20) le plus efficace est sélectionné en se basant sur un ou plusieurs des facteurs suivants : productivité des ordinateurs disponibles (20), accessibilité au réseau des ordinateurs disponibles (20) et l'intensité de consommation de ressources des procédés d'analyses sélectionnés de logiciels malveillants.

**6.** Procédé selon la revendication 1, dans lequel l'analyse d'un gène d'objet en utilisant les procédés d'analyses de logiciels malveillants comprend en outre une ou plusieurs des étapes consistant à :

effectuer une analyse de type de comportement en comparant un gène de type de comportement de l'objet inconnu, à des types de comportement d'objets connus malveillants ou non infectés;
effectuer une analyse de correspondance exacte d'un type d'éléments d'informations du gène d'objet, avec des types d'éléments d'informations associés à des objets connus malveillants ou non infectés;
effectuer une correspondance en chaîne approximative des éléments d'informations du gène d'objet, avec des types d'éléments d'informations associés à des objets connus malveillants ou non infectés;
effectuer une analyse d'estimation de sécurité des éléments d'informations du gène d'objet, en évaluant séparément la malveillance de blocs logiques séparés des éléments d'informations.

**7.** Système géré par ordinateur (5, 500) pour détecter un logiciel malveillant inconnu, le système (5, 500) comprenant :

une mémoire (20) configurée pour stocker un objet de logiciel inconnu; et
un processeur (15) couplé à la mémoire (20) et configuré pour :

générer un ou plusieurs gènes d'objets différents pour une pluralité d'objets non infectés connus et d'objets malveillants connus d'une pluralité de différents types de fichiers, où un gène d'objet est une structure de données contenant une pluralité d'éléments d'informations extraits d'un objet et où différents gènes d'objets contiennent différents types d'éléments d'informations caractéristiques de chacun de la pluralité de différents types de fichiers;
former différentes combinaisons de procédés d'analyses de logiciels malveillants, pour analyser l'un ou plusieurs des gènes d'objets différents de la pluralité d'objets connus, non infectés et malveillants, où une combinaison de procédés d'analyses de logiciels malveillants comprend au moins deux procédés différents d'analyses de logiciels malveillants;

déterminer, pour chaque combinaison de procédés d'analyses de logiciels malveillants, un niveau $\left(\frac{|X^b|}{B}\right)$ de détections - réussies - des objets malveillants connus concernant des logiciels malveillants, où B est le nombre d'objets malveillants connus par rapport à chacun de la pluralité des différents types de fichiers, et $|X^b|$ est le nombre d'objets malveillants connus identifiés, par chaque combinaison de procédés d'analyses de logiciels malveillants, comme étant malveillants pour chacun de la pluralité des différents types de fichiers;
déterminer, pour chaque combinaison de procédés d'analyses de logiciels malveillants, un niveau $\left(\frac{|X^w|}{W}\right)$, de détections positives fausses des objets non infectés connus, où *W est* le nombre d'objets non infectés connus, par rapport à chacun de la pluralité des différents types de fichiers, et $|X^w|$ est le nombre d'objets non infectés connus identifiés, par chaque combinaison de procédés d'analyses de logiciels malveillants, comme étant malveillants pour chacun de la pluralité des différents types de fichiers;
déterminer une valeur d'efficacité k pour chaque combinaison de procédés d'analyses de logiciels malveillants, par rapport à chacun de la pluralité des différents types de fichiers, en utilisant l'équation suivante :

$$k = \begin{cases} \frac{|X^b|}{B} - \frac{|X^w|}{W}, si \frac{|X^b|}{B} - \frac{|X^w|}{W} \geq 0, \\ autrement 0 \end{cases}$$

sélectionner, en se basant sur une comparaison des valeurs d'efficacité déterminées (k), la plus efficace combinaison de procédés d'analyses de logiciels malveillants, pour chacun de la pluralité des différents types de fichiers;
sélectionner, en se basant sur le type de fichier d'un objet inconnu, la plus efficace combinaison de procédés d'analyses de logiciels malveillants, pour analyser l'objet inconnu afin de détecter la présence d'un logiciel malveillant;
générer, sur la base de la combinaison sélectionnée de procédés d'analyses de logiciels malveillants, des gènes d'objets correspondants à partir de l'objet inconnu; et
analyser chacun des gènes d'objets générés de l'objet inconnu, en utilisant la plus efficace combinaison sélectionnée de procédés d'analyses de logiciels malveillants, pour déterminer si l'objet inconnu est non infecté ou malveillant.

**8.** Système (5, 500) selon la revendication 7, dans lequel le processeur (15) est configuré en outre pour :

déterminer l'intensité de consommation de ressources de chaque procédé d'analyse sélectionné de logiciels malveillants;
analyser l'un des gènes d'objets générés de l'objet inconnu, en utilisant initialement la consommation de ressources la moins intensive parmi les procédés d'analyses sélectionnés de logiciels malveillants, pour déterminer si l'objet inconnu est non infecté ou malveillant; et
analyser un ou plusieurs des autres gènes d'objets générés de l'objet inconnu, en utilisant la consommation de ressources la plus intensive parmi les procédés d'analyses sélectionnés de logiciels malveillants, pour déterminer si l'objet inconnu est non infecté ou malveillant, seulement quand la consommation de ressources la moins intensive parmi les procédés d'analyses sélectionnés de logiciels malveillants ne réussit pas à déterminer si l'objet inconnu est non infecté ou malveillant.

**9.** Système (5, 500) selon la revendication 7, dans lequel le processeur (15) est configuré en outre pour sélectionner parmi une pluralité d'ordinateurs disponibles (20), l'ordinateur (20) le plus efficace pour analyser l'objet inconnu afin de détecter la présence d'un logiciel malveillant.

**10.** Système (5, 500) selon la revendication 9, dans lequel l'ordinateur (20) le plus efficace est sélectionné en se basant sur un ou plusieurs des facteurs suivants : productivité des ordinateurs disponibles (20), accessibilité au réseau des ordinateurs disponibles (20) et grosse consommation de ressources des procédés d'analyses sélectionnés de logiciels malveillants.

**11.** Système (5, 500) selon la revendication 7, dans lequel un gène d'objet pour chaque procédé d'analyse de logiciel malveillant est sélectionné parmi une des lignes uniques de code de l'objet inconnu, des zones opérationnelles de l'objet inconnu, un trajet d'exécution de l'objet inconnu, un type de comportement de l'objet inconnu, un organigramme de programmation de l'objet inconnu ou un graphe d'appel de fonction de l'objet inconnu.

**12.** Système (5, 500) selon la revendication 7, dans lequel, pour analyser un gène d'objet en utilisant les procédés d'analyses de logiciels malveillants, le processeur (15) est configuré en outre pour effectuer une ou plusieurs des tâches suivantes, à savoir :

une analyse de type de comportement en comparant un gène de type de comportement de l'objet inconnu, à des types de comportement d'objets connus malveillants ou non infectés;
une analyse de correspondance exacte d'un type d'éléments d'informations du gène d'objet, avec des types d'éléments d'informations associés à des objets connus malveillants ou non infectés;
une correspondance en chaîne approximative des éléments d'informations du gène d'objet, avec des types d'éléments d'informations associés à des objets connus malveillants ou non infectés; et
une analyse d'estimation de sécurité des éléments d'informations du gène d'objet, en évaluant séparément la malveillance de blocs logiques séparés des éléments d'informations.

**13.** Produit de programme informatique intégré à un support d'information non transitoire (25) pouvant être lu par l'ordinateur, le support d'information (25) pouvant être lu par l'ordinateur comprenant des instructions exécutables par l'ordinateur, pour détecter des logiciels malveillants inconnus, où le support comprend des instructions pour :

générer un ou plusieurs gènes d'objets différents pour une pluralité d'objets non infectés connus et d'objets malveillants connus d'une pluralité de différents types de fichiers, où un gène d'objet est une structure de données contenant une pluralité d'éléments d'informations extraits d'un objet et où différents gènes d'objets contiennent différents types d'éléments d'informations caractéristiques de chacun de la pluralité de différents types de fichiers;
former différentes combinaisons de procédés d'analyses de logiciels malveillants, pour analyser l'un ou plusieurs des gènes d'objets différents de la pluralité d'objets connus, non infectés et malveillants, où une combinaison de procédés d'analyses de logiciels malveillants comprend au moins deux procédés différents d'analyses de logiciels malveillants;

déterminer, pour chaque combinaison de procédés d'analyses de logiciels malveillants, un niveau $\left(\frac{|X^b|}{B}\right)$ de détections - réussies - des objets malveillants connus concernant des logiciels malveillants, où *B* est le nombre d'objets malveillants connus par rapport à chacun de la pluralité des différents types de fichiers, et $|X^b|$ est le nombre d'objets malveillants connus identifiés, par chaque combinaison de procédés d'analyses de logiciels malveillants, comme étant malveillants pour chacun de la pluralité des différents types de fichiers;

déterminer, pour chaque combinaison de procédés d'analyses de logiciels malveillants, un niveau $\left(\frac{|X^w|}{W}\right)$, de détections positives fausses des objets non infectés connus, où *W* est le nombre d'objets non infectés connus, par rapport à chacun de la pluralité des différents types de fichiers, et $|X^w|$ est le nombre d'objets non infectés connus identifiés, par chaque combinaison de procédés d'analyses de logiciels malveillants, comme étant malveillants pour chacun de la pluralité des différents types de fichiers;
déterminer une valeur d'efficacité *k* pour chaque combinaison de procédés d'analyses de logiciels malveillants, par rapport à chacun de la pluralité des différents types de fichiers, en utilisant l'équation suivante :

$$k = \begin{cases} \frac{|X^b|}{B} - \frac{|X^w|}{W}, si \frac{|X^b|}{B} - \frac{|X^w|}{W} \geq 0, \\ autrement 0 \end{cases}$$

sélectionner, en se basant sur une comparaison des valeurs d'efficacité déterminées *k*, la plus efficace combinaison de procédés d'analyses de logiciels malveillants, pour chacun de la pluralité des différents types de fichiers;

sélectionner, en se basant sur le type de fichier d'un objet inconnu, la plus efficace combinaison de procédés d'analyses de logiciels malveillants, pour analyser l'objet inconnu afin de détecter la présence d'un logiciel malveillant;

générer, sur la base de la combinaison sélectionnée de procédés d'analyses de logiciels malveillants, des gènes d'objets correspondants à partir de l'objet inconnu; et

analyser chacun des gènes d'objets générés de l'objet inconnu, en utilisant la plus efficace combinaison sélectionnée de procédés d'analyses de logiciels malveillants, pour déterminer si l'objet inconnu est non infecté ou malveillant.

**14.** Produit selon la revendication 13, comprenant en outre des instructions pour :

déterminer l'intensité de consommation de ressources de chaque procédé d'analyse sélectionné de logiciels malveillants;

analyser l'un des gènes d'objets générés de l'objet inconnu, en utilisant initialement la consommation de ressources la moins intensive parmi les procédés d'analyses sélectionnés de logiciels malveillants, pour déterminer si l'objet inconnu est non infecté ou malveillant; et

analyser un ou plusieurs des autres gènes d'objets générés de l'objet inconnu, en utilisant la consommation de ressources la plus intensive parmi les procédés d'analyses sélectionnés de logiciels malveillants, pour déterminer si l'objet inconnu est non infecté ou malveillant, seulement quand la consommation de ressources la moins intensive parmi les procédés d'analyses sélectionnés de logiciels malveillants ne réussit pas à déterminer si l'objet inconnu est non infecté ou malveillant.

**15.** Produit selon la revendication 13, dans lequel un gène d'objet pour chaque procédé d'analyse de logiciel malveillant est sélectionné parmi une des lignes uniques de code de l'objet inconnu, des zones opérationnelles de l'objet inconnu, un trajet d'exécution de l'objet inconnu, un type de comportement de l'objet inconnu, un organigramme de programmation de l'objet inconnu ou un graphe d'appel de fonction de l'objet inconnu.

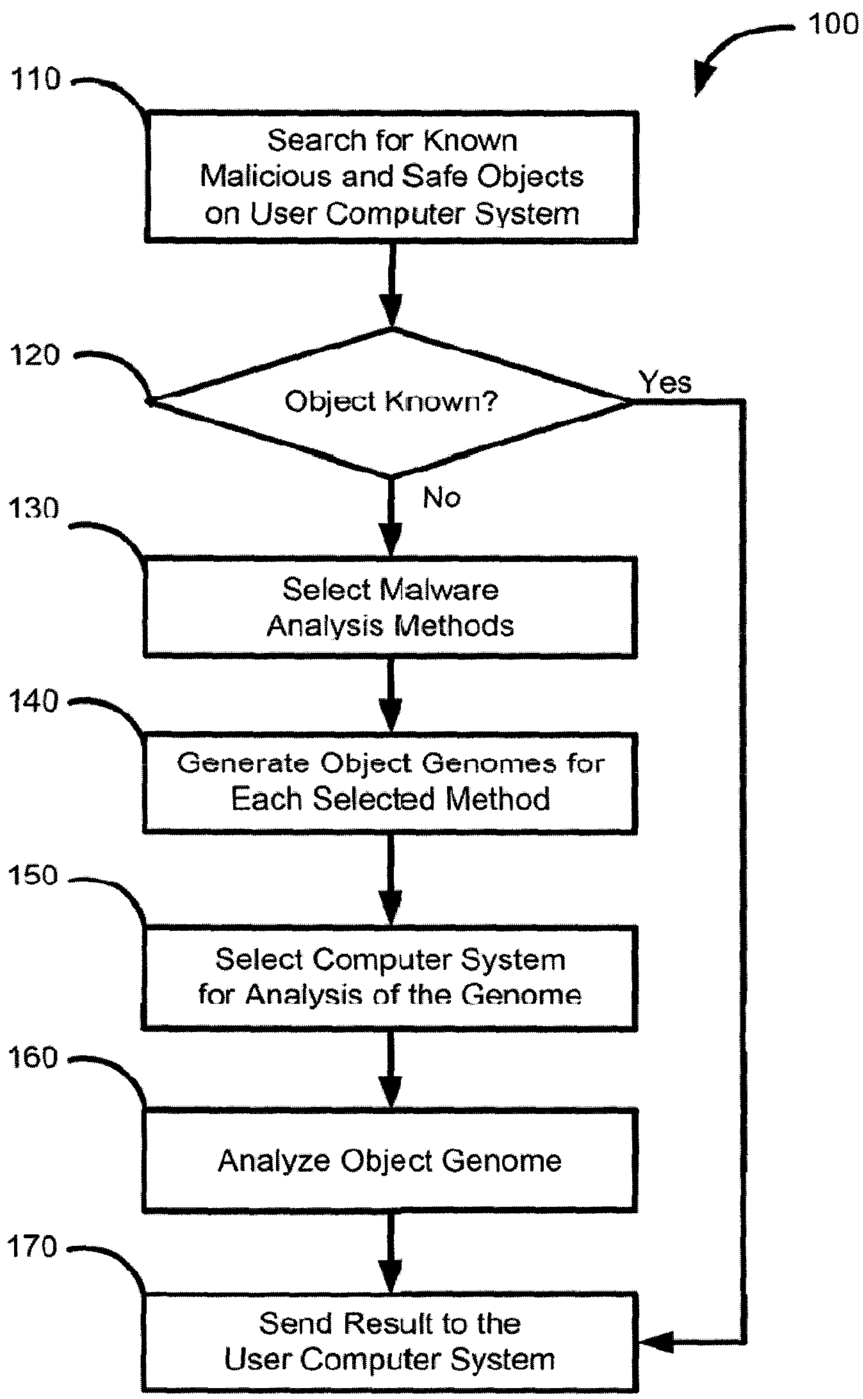
100
110
Search for Known Malicious and Safe Objects on User Computer System
120
Object Known?
Yes
No
130
Select Malware Analysis Methods
140
Generate Object Genomes for Each Selected Method
150
Select Computer System for Analysis of the Genome
160
Analyze Object Genome
170
Send Result to the User Computer System

Fig. 1

| Efficiency \ Resource-intensiveness | Low | Medium | High |
|---|---|---|---|
| Low | Method 1, i | | |
| Medium | Method 2, 3, j | Method m | Method k, l |
| High | | Method h, f | Method n, g |

**Fig. 2**

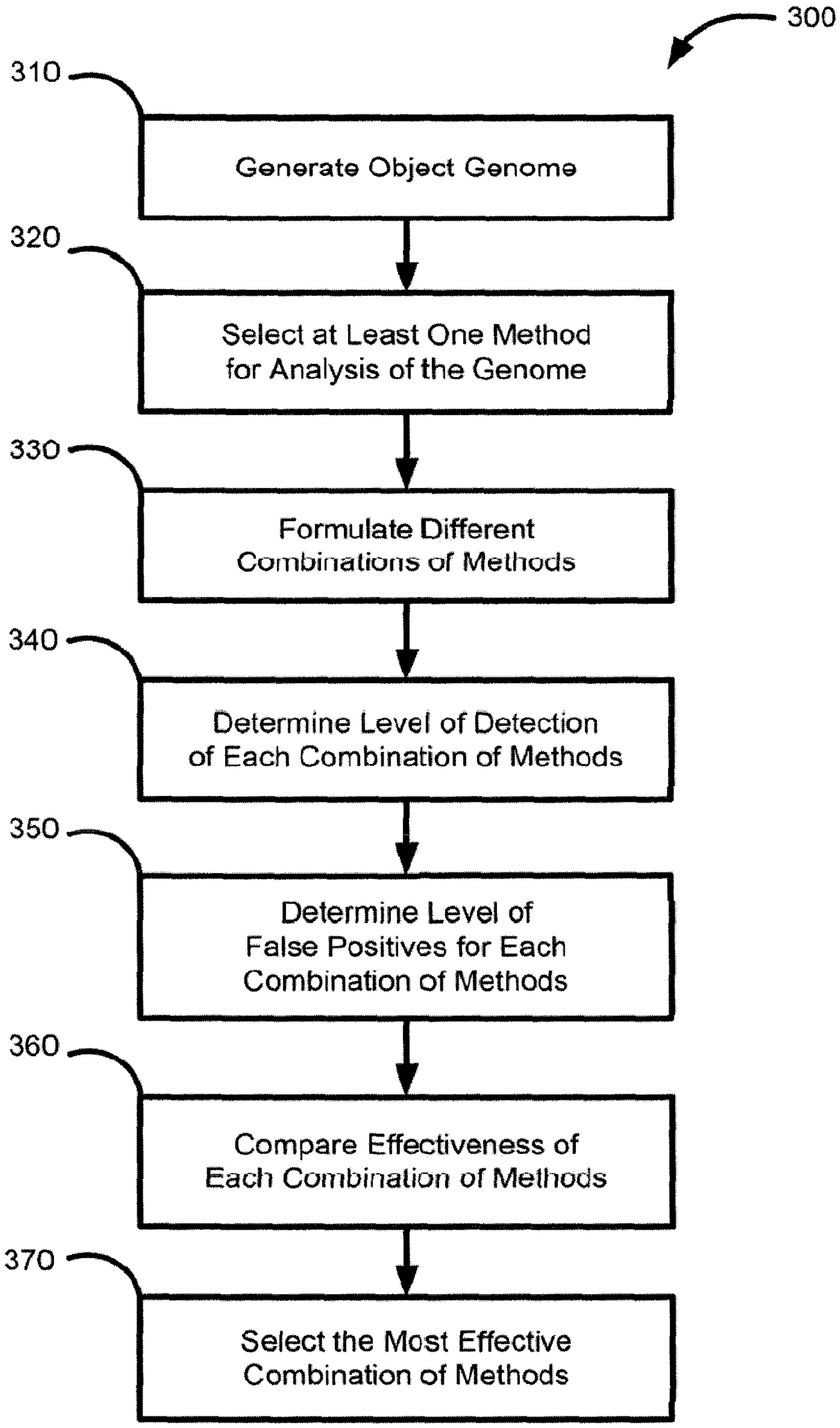
300
310
Generate Object Genome
320
Select at Least One Method for Analysis of the Genome
330
Formulate Different Combinations of Methods
340
Determine Level of Detection of Each Combination of Methods
350
Determine Level of False Positives for Each Combination of Methods
360
Compare Effectiveness of Each Combination of Methods
370
Select the Most Effective Combination of Methods

Fig. 3

| List of Computers | Productivity Level | Accessibility Level |
|---|---|---|
| Computer 1 | High | Low |
| Computer 2 | Medium | Low |
| Computer 3 | Medium | Medium |
| ... | ... | ... |
| Computer N | Low | Medium |

Fig. 4

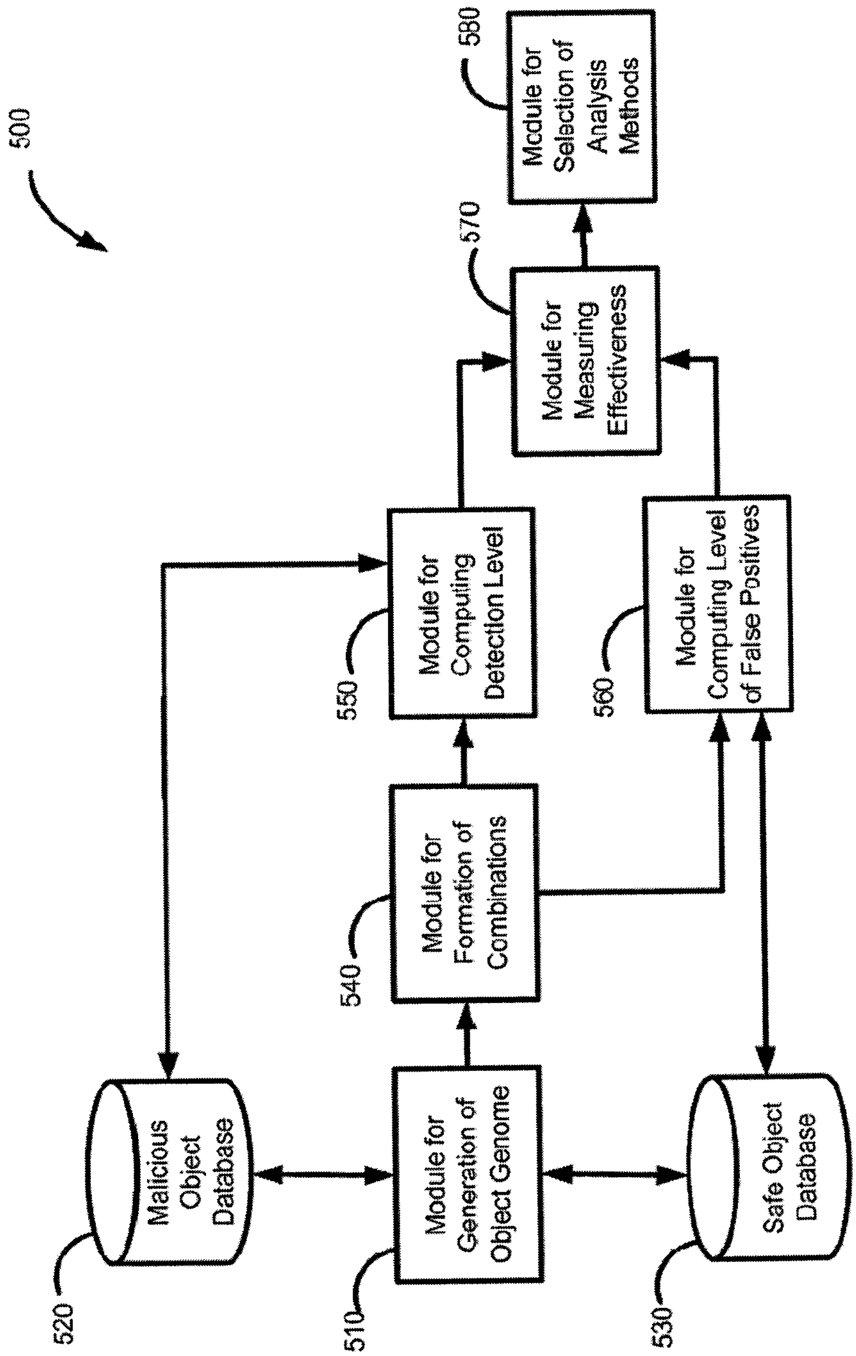
500
Module for Selection of Analysis Methods
580
Module for Measuring Effectiveness
570
Module for Computing Detection Level
550
Module for Computing Level of False Positives
560
Module for Formation of Combinations
540
Malicious Object Database
520
Module for Generation of Object Genome
510
Safe Object Database
530

Fig. 5

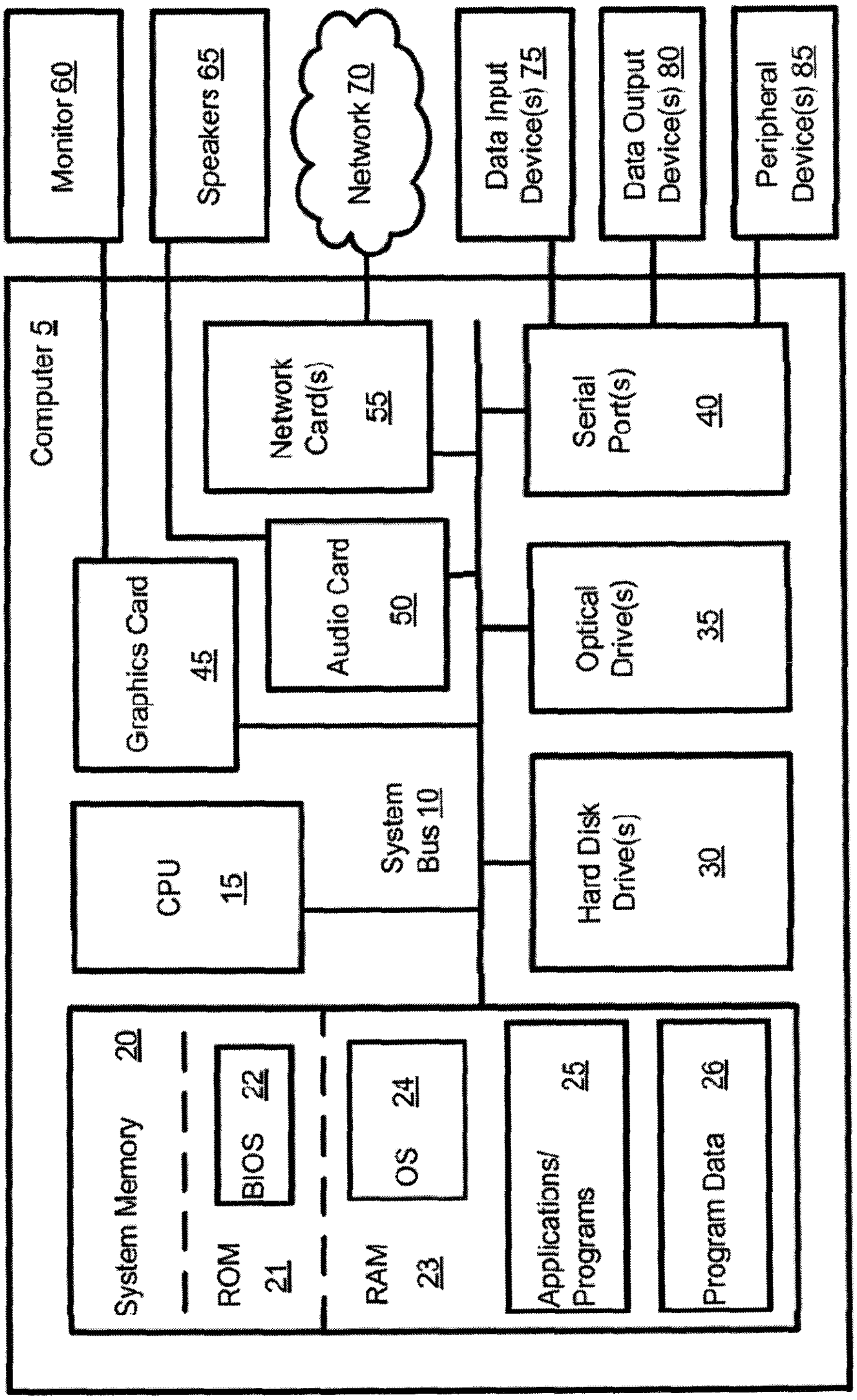
Monitor 60
Speakers 65
Network 70
Data Input Device(s) 75
Data Output Device(s) 80
Peripheral Device(s) 85
Computer 5
Network Card(s) 55
Serial Port(s) 40
Graphics Card 45
Audio Card 50
Optical Drive(s) 35
CPU 15
System Bus 10
Hard Disk Drive(s) 30
System Memory 20
ROM 21
BIOS 22
RAM 23
OS 24
Applications/ Programs 25
Program Data 26

Fig. 6

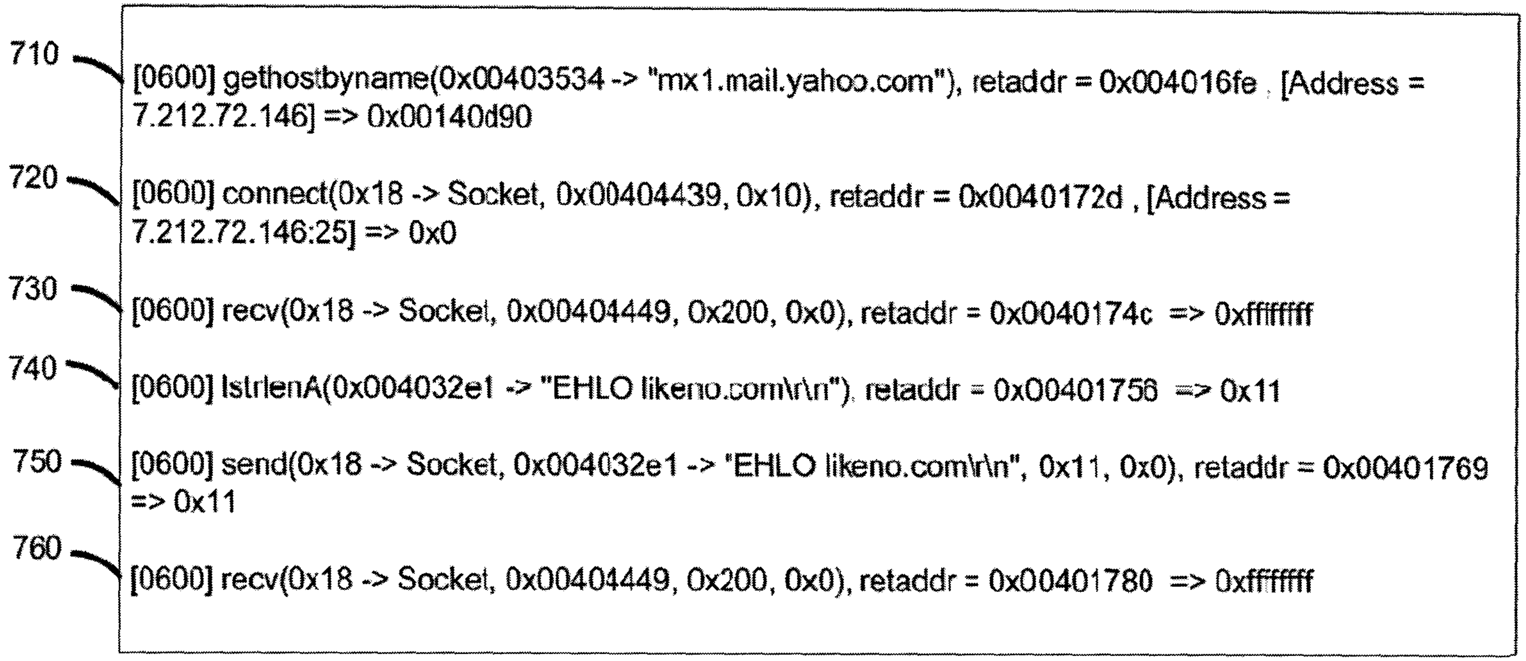

710
[0600] gethostbyname(0x00403534 -> "mx1.mail.yahoo.com"), retaddr = 0x004016fe , [Address = 7.212.72.146] => 0x00140d90
720
[0600] connect(0x18 -> Socket, 0x00404439, 0x10), retaddr = 0x0040172d , [Address = 7.212.72.146:25] => 0x0
730
[0600] recv(0x18 -> Socket, 0x00404449, 0x200, 0x0), retaddr = 0x0040174c => 0xffffffff
740
[0600] lstrlenA(0x004032e1 -> "EHLO likeno.com\r\n"), retaddr = 0x00401756 => 0x11
750
[0600] send(0x18 -> Socket, 0x004032e1 -> "EHLO likeno.com\r\n", 0x11, 0x0), retaddr = 0x00401769 => 0x11
760
[0600] recv(0x18 -> Socket, 0x00404449, 0x200, 0x0), retaddr = 0x00401780 => 0xffffffff


Fig. 7

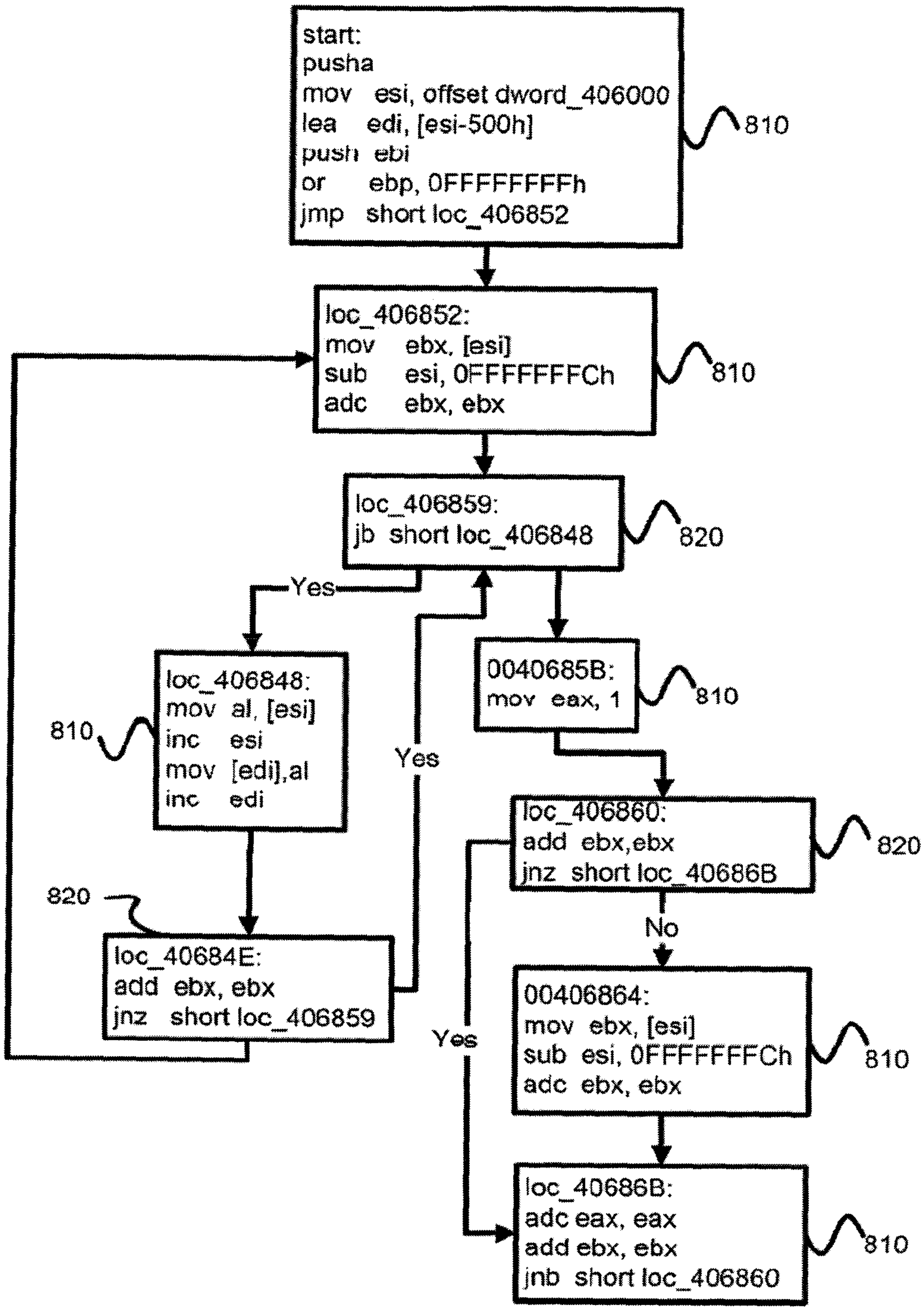
start:
pusha
mov esi, offset dword_406000
lea edi, [esi-500h]
push ebi
or ebp, 0FFFFFFFFh
jmp short loc_406852
810
loc_406852:
mov ebx, [esi]
sub esi, 0FFFFFFFCh
adc ebx, ebx
810
loc_406859:
jb short loc_406848
820
Yes
loc_406848:
mov al, [esi]
inc esi
mov [edi],al
inc edi
810
Yes
0040685B:
mov eax, 1
810
loc_406860:
add ebx,ebx
jnz short loc_40686B
820
820
loc_40684E:
add ebx, ebx
jnz short loc_406859
No
Yes
00406864:
mov ebx, [esi]
sub esi, 0FFFFFFFCh
adc ebx, ebx
810
loc_40686B:
adc eax, eax
add ebx, ebx
jnb short loc_406860
810

Fig. 8

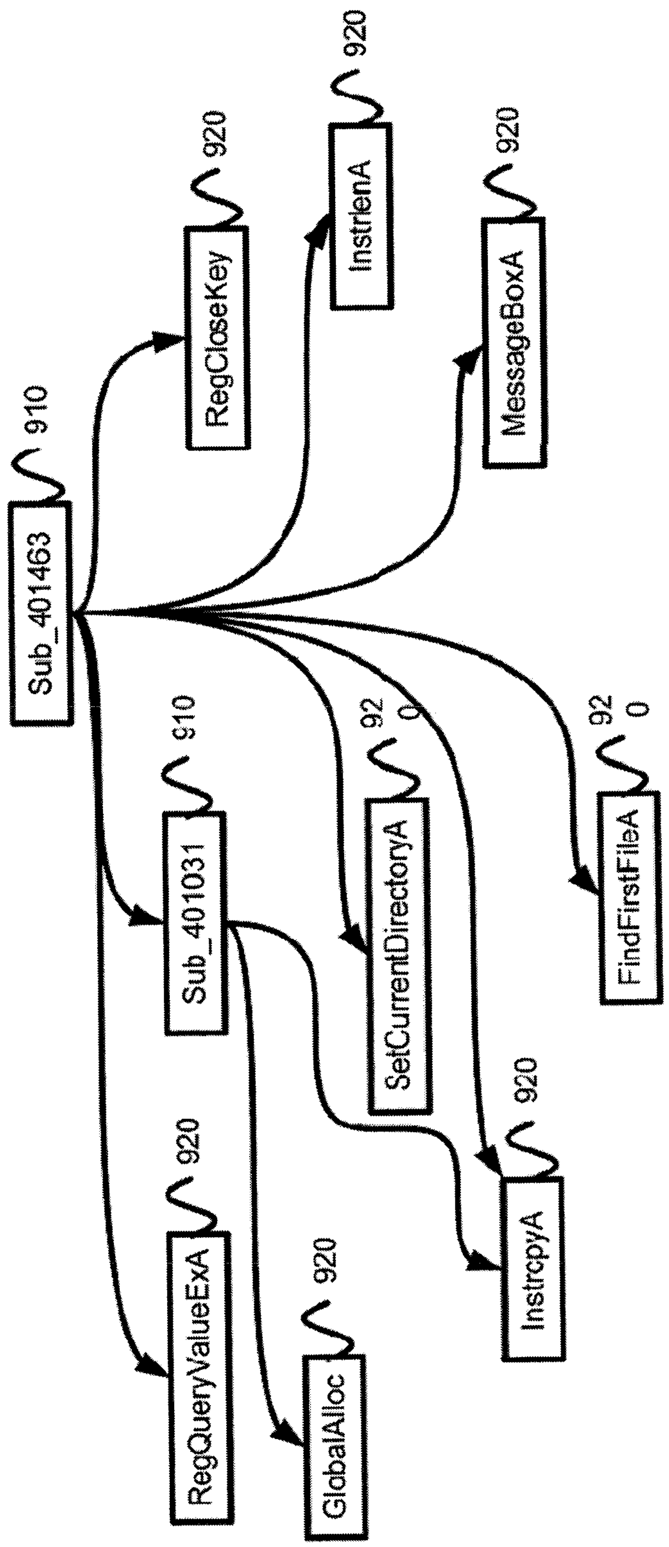
Sub_401463
910
RegCloseKey
920
InstrlenA
920
MessageBoxA
920
Sub_401031
910
SetCurrentDirectoryA
92
0
FindFirstFileA
92
0
RegQueryValueExA
920
GlobalAlloc
920
InstrcpyA
920

Fig. 9

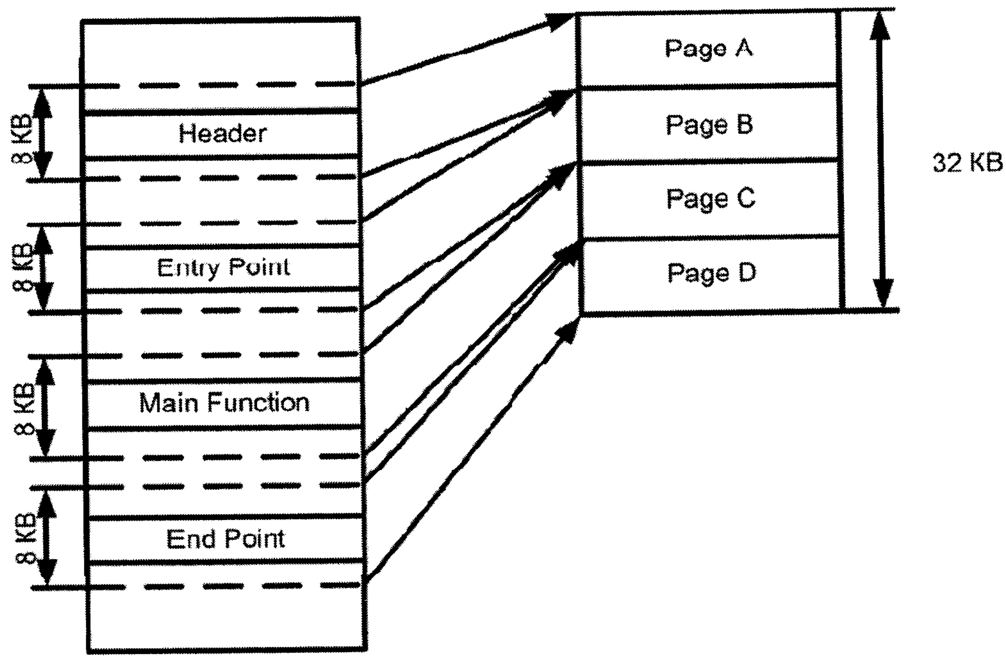
8 KB
Header
8 KB
Entry Point
8 KB
Main Function
8 KB
End Point
Page A
Page B
Page C
Page D
32 KB

Fig. 10

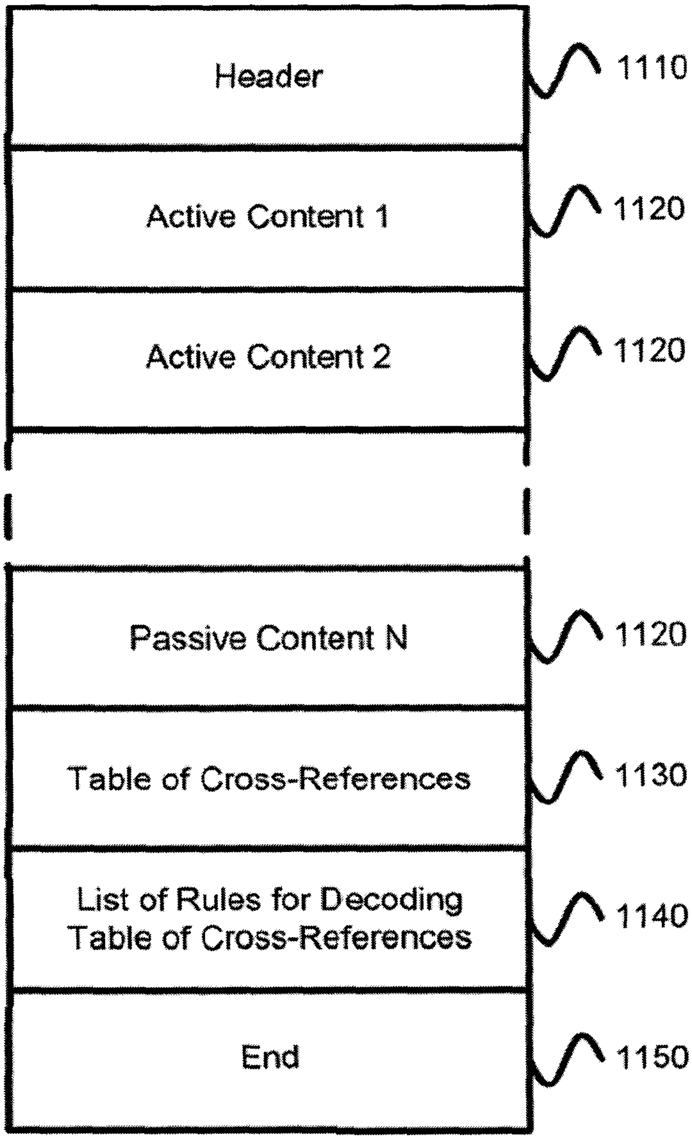
Header
1110
Active Content 1
1120
Active Content 2
1120
Passive Content N
1120
Table of Cross-References
1130
List of Rules for Decoding
Table of Cross-References
1140
End
1150

Fig. 11

| Object Type / List of Combinations | Object Type 1 | Object Type 2 | ... | Object Type N |
|---|---|---|---|---|
| Combination 1 | C11 | C12 | ... | C1N |
| Combination 2 | C21 | C22 | ... | C2N |
| Combination 3 | C31 | C32 | ... | C3N |
| ... | ... | ... | ... | ... |

Fig. 12

| Code portions of Trojan.Win32.Qqad.h | Code portions of Trojan.Win32.Qqad |
|---|---|
| http://www.wz1122.com/taobao1.html | http://www.game1122.com/?new |
| \Internet Explorer.jzmm | \Internet Explorer.jdmm |
| \Internet Explorer.jzmm | \Internet Explorer.jdmm |
| c:\fjiwefwefefj.log | c:\aaaa.log |
| c:\fewfwesss.log | c:\fjiefj.log |
| c:\aaa.log | {FBF23B40-E3F0-101B-8488- 00AA003E56F8} |
| {3AFAC3E1-F7B9-48F1-9D8F- 8274EB4AAFA8} | c:\fjie.log |
| c:\aafef.log | c:\fewd.log |

Fig. 13A

| Order of API-Function calls for Trojan-Downloader.Win32.CodecPack.ofo | | Order of API-Function calls for Trojan-Downloader.Win32.CodecPack.oel | |
|---|---|---|---|
| 004016AC | GetACP | 0040812B | lstrlen |
| 00401739 | GetACP | 00408193 | lstrlen |
| 00401796 | GetACP | 0040820E | GetACP |
| 004017F8 | GetACP | 0040827B | GetACP |
| 00401862 | GetACP | 004082E1 | GetACP |
| 004018B8 | GetACP | 00408345 | lstrlen |
| 00401917 | GetACP | 004083AE | GetACP |
| 0040197A | lstrlen | 0040840C | GetACP |
| 004019E0 | GetACP | 00408470 | lstrlen |
| 00401A50 | lstrlen | 004084CC | GetACP |
| 00401AB5 | GetACP | 00408544 | lstrlen |
| 00401B13 | lstrlen | 004085B4 | lstrlen |
| 00401B82 | GetACP | 00408621 | GetACP |
| 00401BE8 | GetACP | 00408698 | lstrlen |
| 00401C52 | GetACP | 004086F9 | lstrlen |
| 00401CB5 | GetACP | 00408766 | lstrlen |
| 00401D2D | lstrlen | 004087D7 | lstrlen |
| 00401D9F | GetACP | 00408845 | lstrlen |
| 00401E0E | lstrlen | 004088B1 | lstrlen |
| 00401E85 | GetACP | | |
| 00401EF6 | lstrlen | | |
| 00401F67 | lstrlen | | |
| 00401FD6 | GetACP | | |

**Fig. 13B**

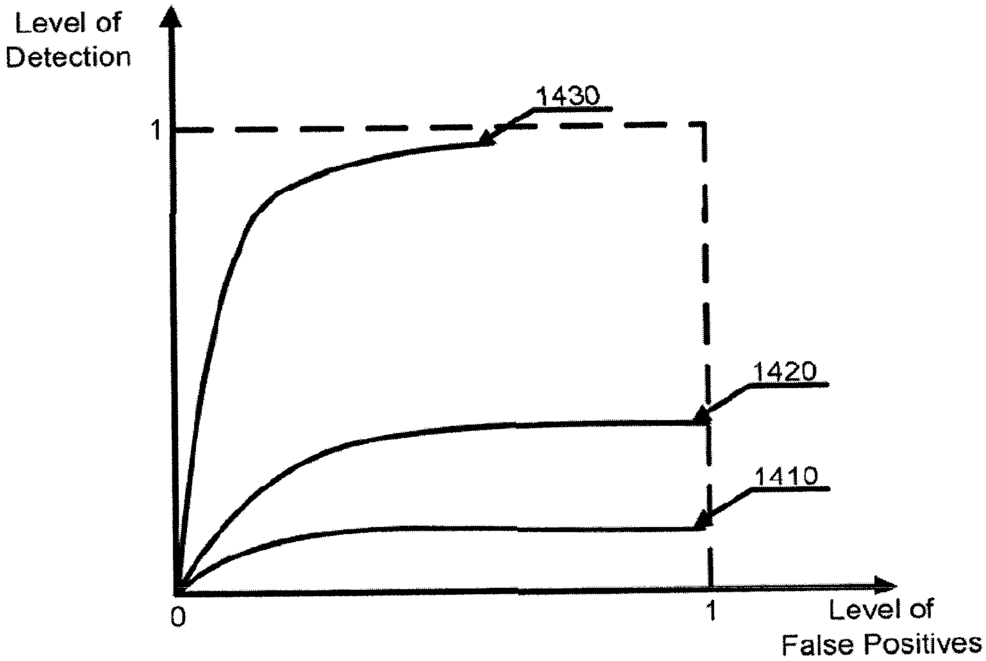
Level of
Detection
1
1430
1420
1410
0
1
Level of
False Positives

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060037080 A1


### Non-patent literature cited in the description


- **SCHULTZ M. et al.** Data Mining Methods for Detection of New Malicious Executables. *Proceedings of the 2001 IEEE Symposium on Security and Privacy. S&P 2001. Oakland, CA,* 14 May 2001
- **MENAHEM E. et al.** Improving malware detection by applying multi-inducer ensemble. *Computational Statistics and Data Analysis,* 15 February 2009, vol. 53 (4), 1483-1494
- **PETER A. FLACH.** The Geometry of ROC Space: Understanding Machine Learning Metrics through ROC Isometrics. *Proceedings of the Twentieth International Conference on Machine Learning (ICML-2003),* 01 August 2003